# EUROPEAN PATENT SPECIFICATION

(11) **EP 4 541 038 B1**
(45) Date of publication and mention of the grant of the patent: **21.10.2026**
(21) Application number: 23734374.4
(22) Date of filing: 08.06.2023
(51) Int. Cl.: H04N 25/621, H04N 25/772, H04N 25/57, H04N 25/59, H04N 25/79

(54) **SOLID-STATE IMAGE-CAPTURING DEVICE, AND IMAGE-CAPTURING APPARATUS**
FESTKÖRPERBILDAUFNAHMEVORRICHTUNG UND BILDAUFNAHMEVORRICHTUNG
DISPOSITIF DE CAPTURE D'IMAGE À SEMI-CONDUCTEUR, ET APPAREIL DE CAPTURE D'IMAGE

(30) Priority: 15.06.2022 JP 2022096866; 04.04.2023 JP 2023060904
(43) Date of publication of application: 23.04.2025
(73) Proprietor: Sony Semiconductor Solutions Corporation, Atsugi-shi, Kanagawa 243-0014 (JP)
(72) Inventor: IIDA Satoko, Atsugi-shi, Kanagawa 243-0014 (JP)
(74) Representative: Müller Hoffmann & Partner
(86) International application number: PCT/JP2023/021325
(87) International publication number: WO 2023/243527

(56) References cited:
- WO-A1-2021/162017
- WO-A1-2022/215682
- US-A1- 2019 098 232
- US-A1- 2022 353 453
- US-B1- 7 202 463
- US-B1- 9 521 337
- US-B2- 11 711 637

## Description

### [Technical Field]

The present disclosure relates to a light detecting device, e.g., a solid-state image-capturing device, and an electronic apparatus, e.g., an image-capturing apparatus.

### [Background Art]

There generally is known a method for expanding the dynamic range of a solid-state image-capturing device regardless of accumulation capacitance of accumulating a charge in a photoelectric conversion unit. In this method for expanding the dynamic range, the dynamic range is expanded by counting the number of times that a charge amount obtained by photoelectric conversion exceeds a threshold value. An example of such solid-state image-capturing device is described in patent document WO 2021/162017 A1. However, a charge that does not exceed the threshold value is not detected as a signal charge, and accordingly signals deteriorate as illuminance decreases. From patent document US 7202463 B1, a high dynamic range image sensor is known that combines the number of counts registered within an exposure period with a final analog image sensor voltage at the end of the exposure period to construct the pixel value for the entire exposure period. Each time a comparator senses that a photodiode has reached its saturation limit, the comparator causes a counter to increment a count value by one and causes a reset transistor to reset the photodiode. In document US 9521337 B1, a core pixel element is implemented by a three-transistor or four-transistor (3T or 4T) active pixel having a photodiode that exhibits a decaying analog voltage output in response to incident light. A comparator receives an analog output from the core pixel element and asserts an asynchronous reset signal whenever the analog output drops below a threshold, which can be selected to fall in a linear response region of the photodiode, but nearer the saturation end of the pixel response function. The pixel value is constructed from the number of asynchronous pixel resets and the final analog output from the core pixel element. Patent document US 2019/0098232 A1, on the other hand, describes a solid-state imaging device with pixels that comprise an overflow path for charge overflowing from the photoelectric conversion element. Through the overflow path, charge exceeding the saturated charge amount of the photoelectric conversion element and/or a floating diffusion can overflow to a storage capacitor in a case of very high light. Reading out the pixel includes evaluating the voltage of the storage capacitor and the voltage of the floating diffusion and/or photoelectric conversion element.

### [Citation List]

### [Patent Literature]

[PTL 1]
JP 2021-114742A

### [Summary]

### [Technical Problem]

Accordingly, the present disclosure provides a solid-state image-capturing device and an image-capturing apparatus that expand the dynamic range, and also are capable of converting a small-amount charge obtained by photoelectric conversion into an images signal.

### [Solution to Problem]

In order to solve the above problem, according to the present disclosure, a light detecting device according to any of the appended claims is provided.

### [Brief Description of Drawings]

[Fig. 1]

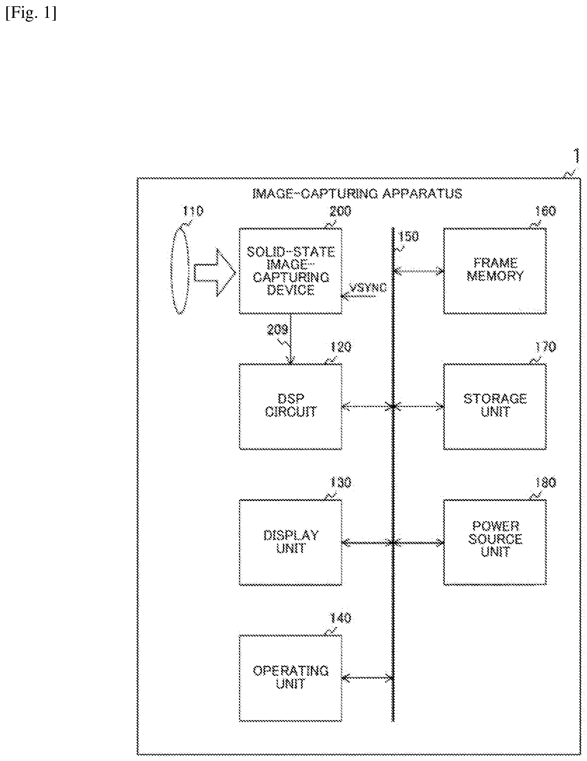

   Fig. 1 is a block diagram illustrating a configuration example of an image-capturing apparatus 1 according to a first embodiment.
[Fig. 2]

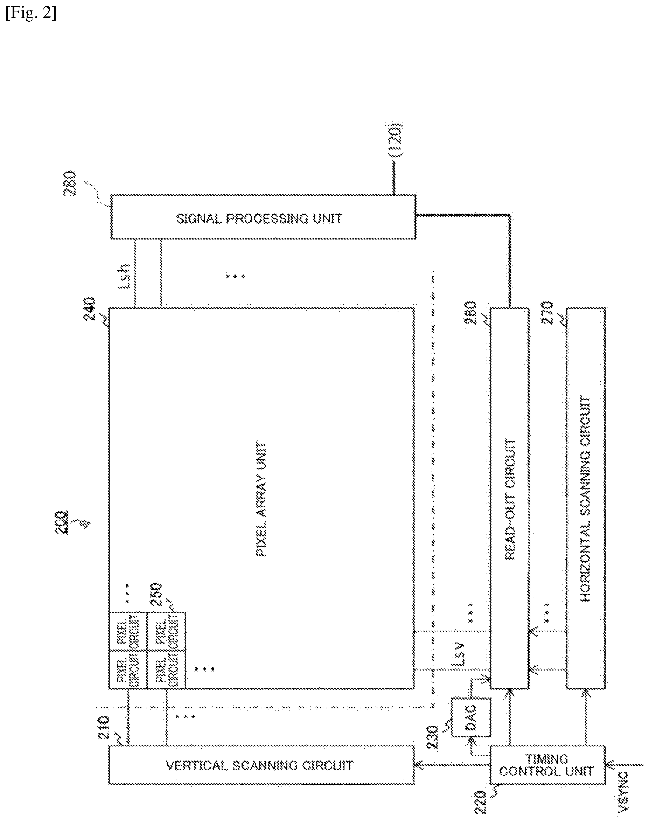

   Fig. 2 is a block diagram illustrating a configuration example of a solid-state image-capturing device 200 according to the present embodiment.
[Fig. 3]

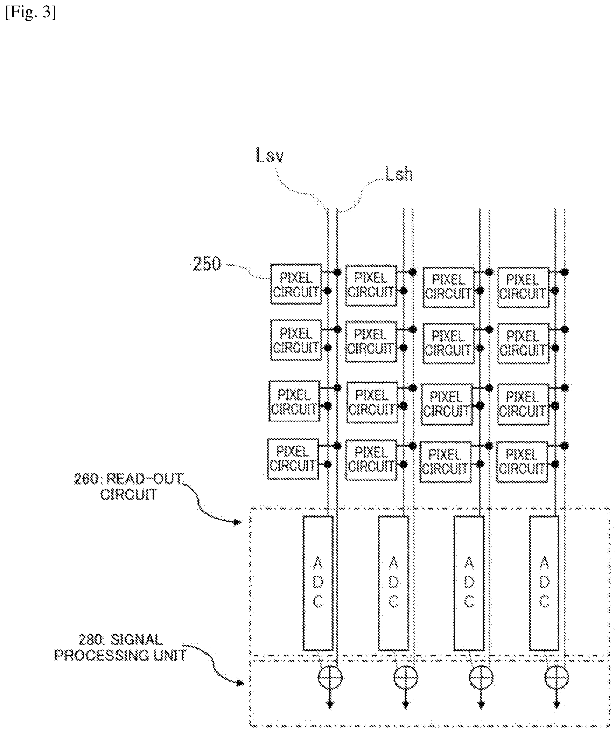

   Fig. 3 is a diagram schematically illustrating connection of pixel circuits and a processing circuit.
[Fig. 4]

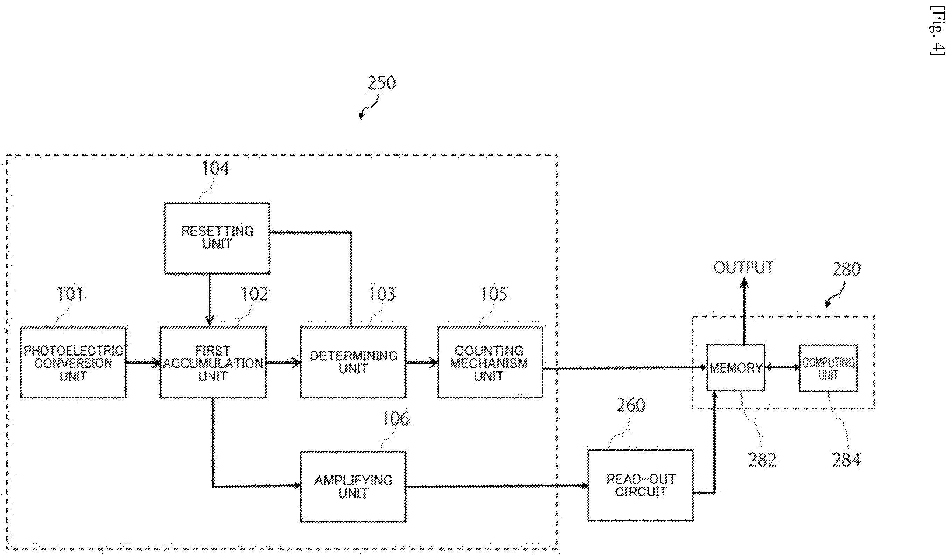

   Fig. 4 is a block diagram illustrating a configuration example of a pixel circuit 250.
[Fig. 5]

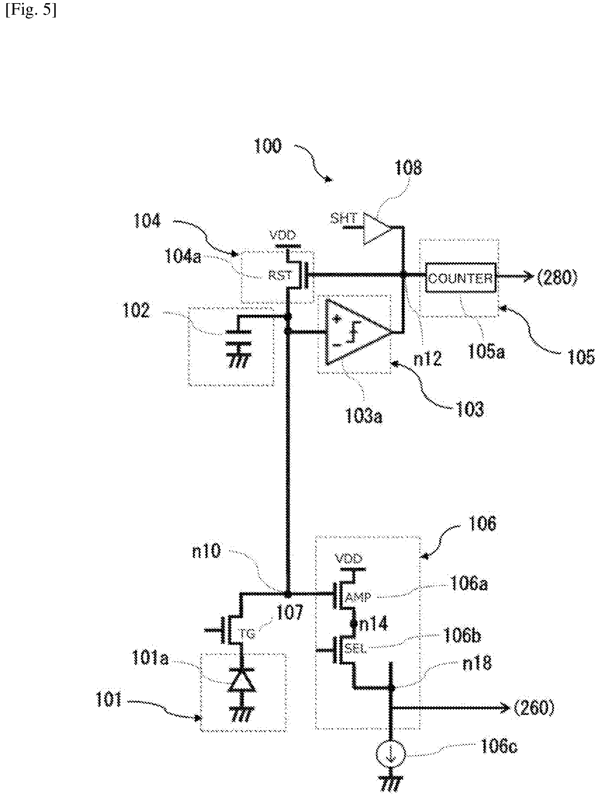

   Fig. 5 is a diagram illustrating a circuit configuration example of a pixel circuit 250 for discussing background useful for understanding of the embodiments.
[Fig. 6]

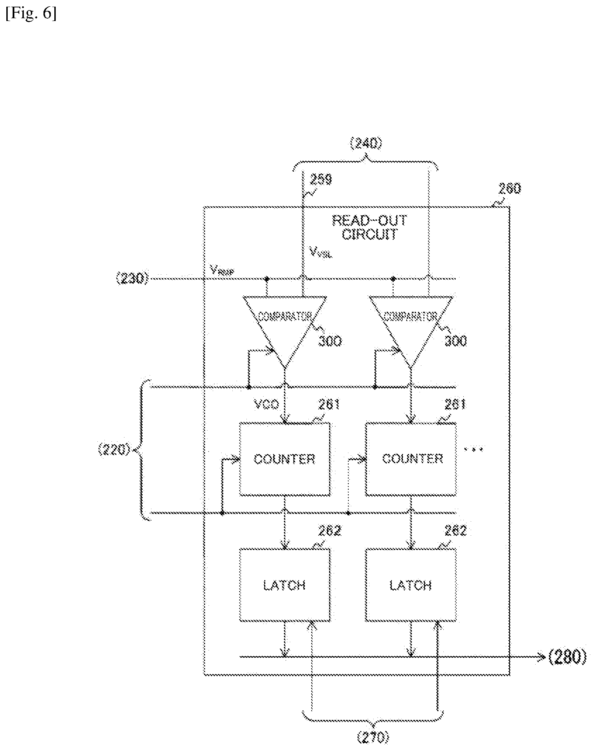

   Fig. 6 is a block diagram illustrating a configuration example of a read circuit 260 according to the first embodiment of the present technology.
[Fig. 7]

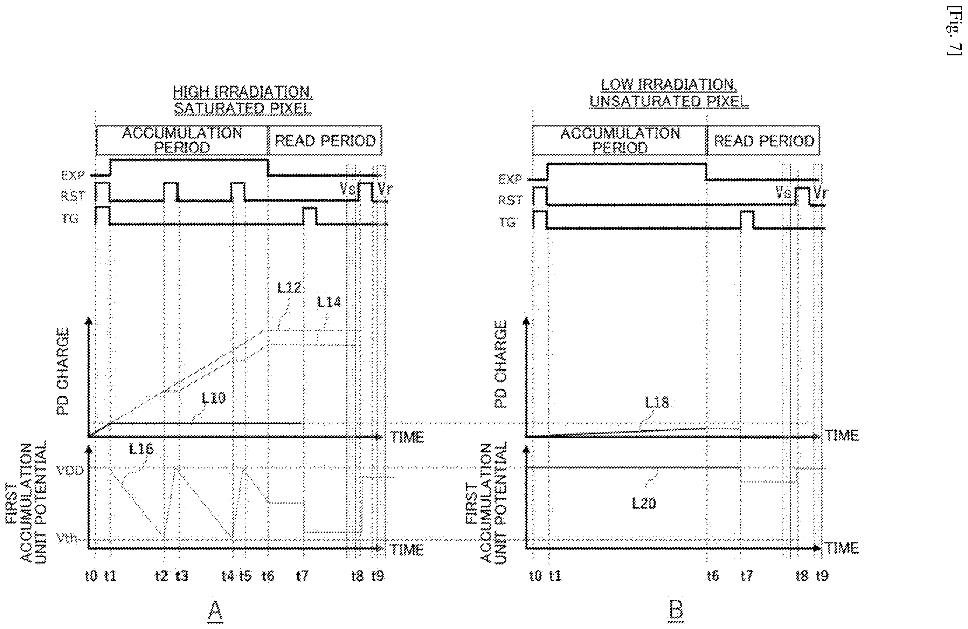

   Fig. 7 is a timing chart of a processing example.
[Fig. 8]

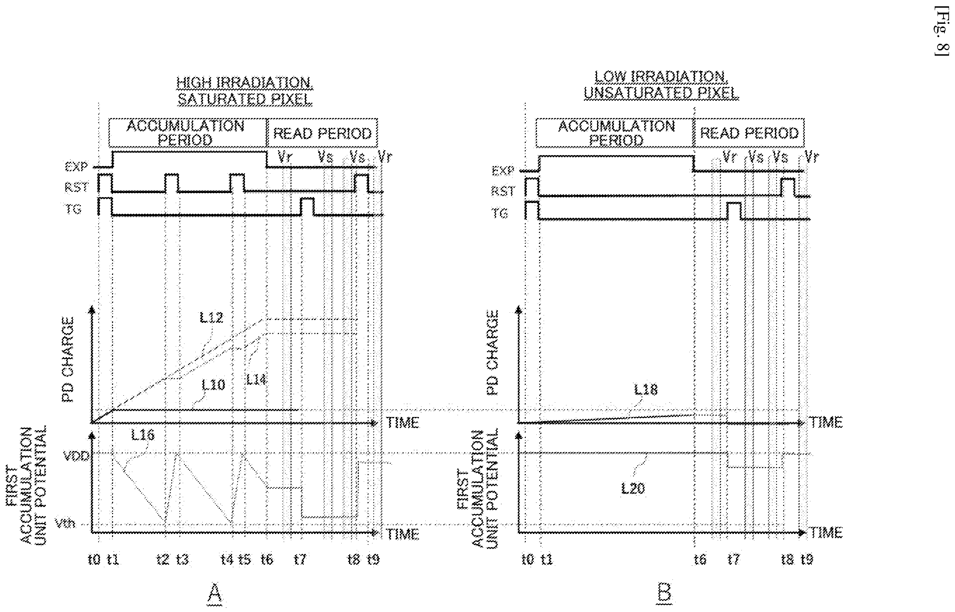

   Fig. 8 is a timing chart of another processing example.
[Fig. 9]

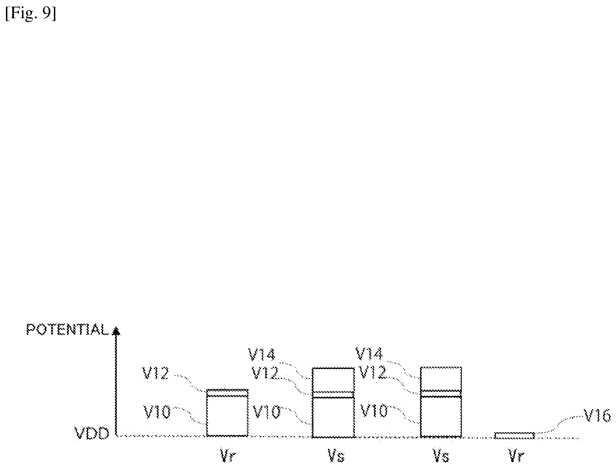

   Fig. 9 is a diagram conceptually describing read potential at Vr, Vs, Vs, and Vr levels in Fig. 8.
[Fig. 10]

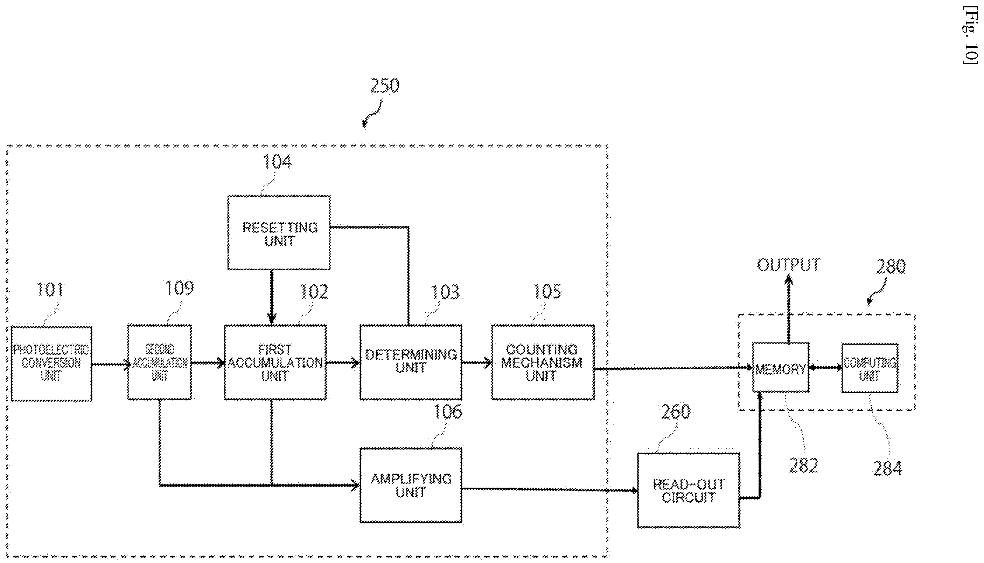

   Fig. 10 is a block diagram illustrating a configuration example of a pixel circuit 250 according to a second embodiment.
[Fig. 11]

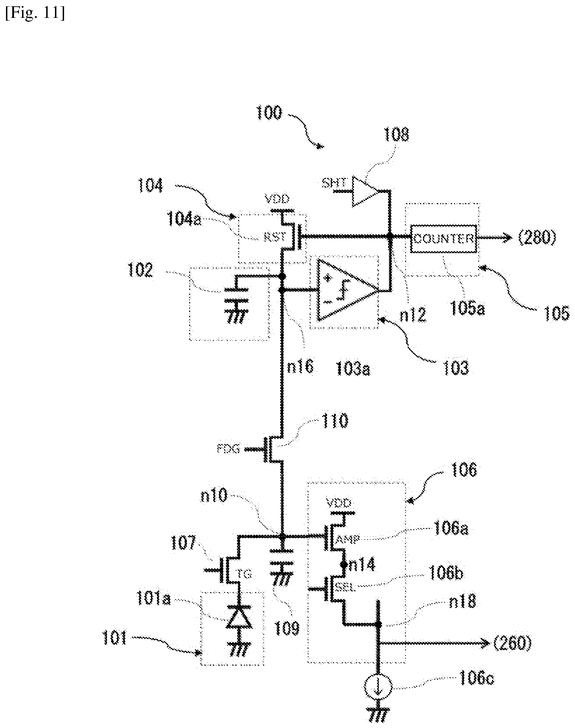

   Fig. 11 is a diagram illustrating a circuit configuration example of the pixel circuit 250 according to the second embodiment.
[Fig. 12]

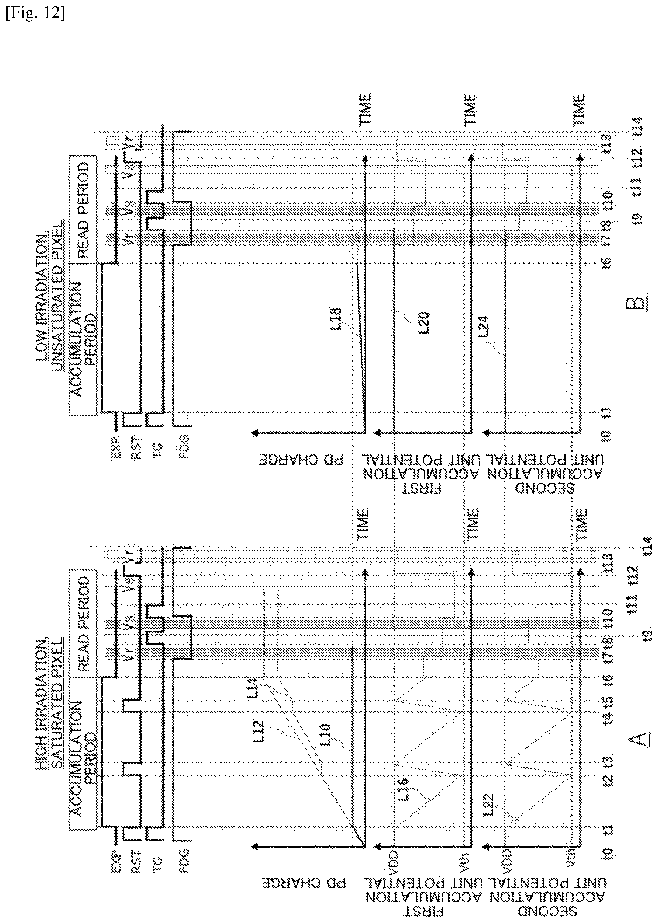

   Fig. 12 is a timing chart of an operation example according to the second embodiment.
[Fig. 13]

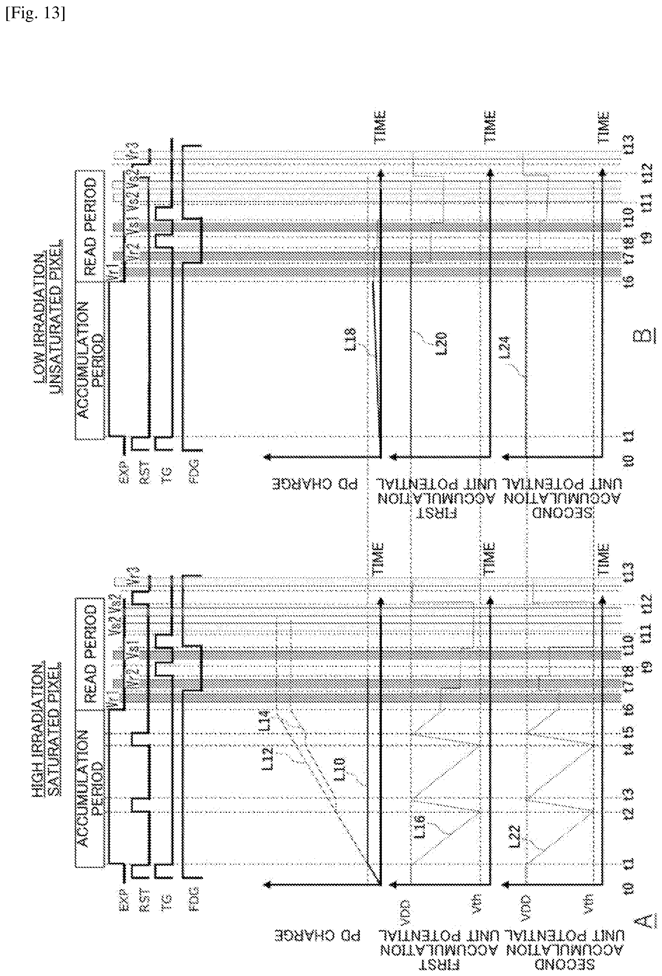

   Fig. 13 is a timing chart of a processing example according to a modification of the second embodiment.
[Fig. 14]

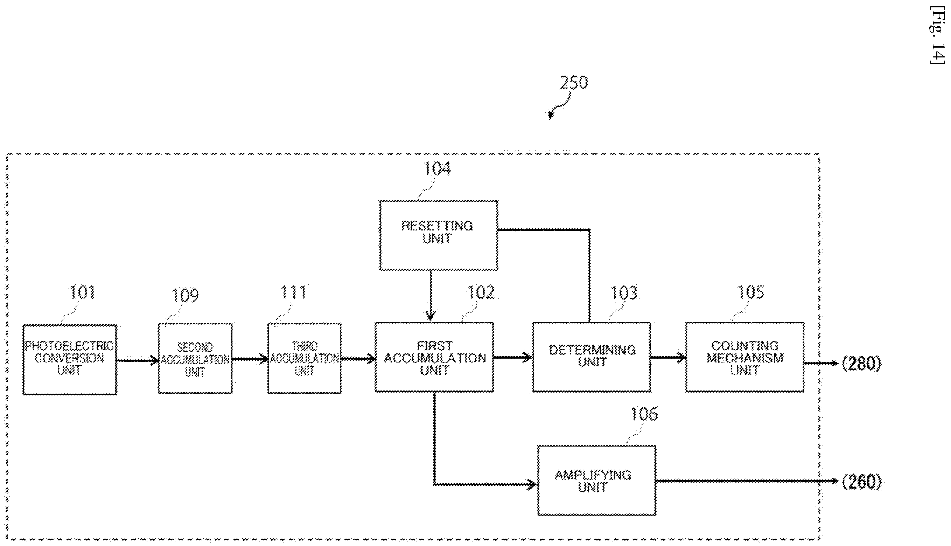

   Fig. 14 is a block diagram illustrating a configuration example of a pixel circuit 250 according to a third embodiment.
[Fig. 15]

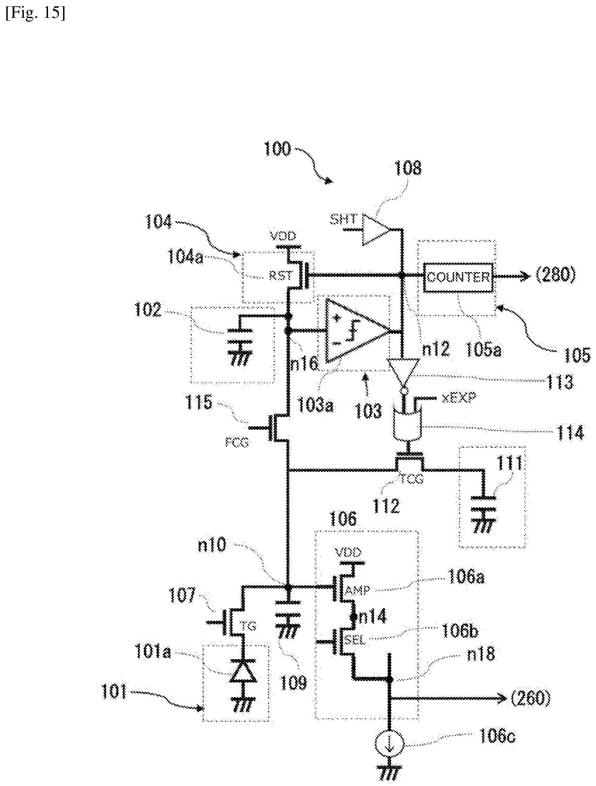

   Fig. 15 is a diagram illustrating a circuit configuration example of the pixel circuit 250 according to the third embodiment.
[Fig. 16]

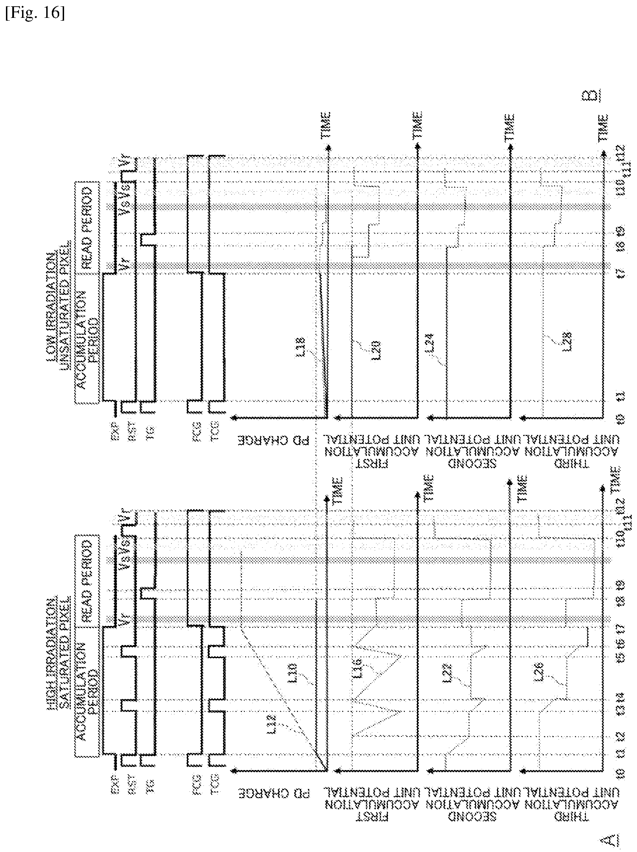

   Fig. 16 is a timing chart of an operation example according to the third embodiment.
[Fig. 17]

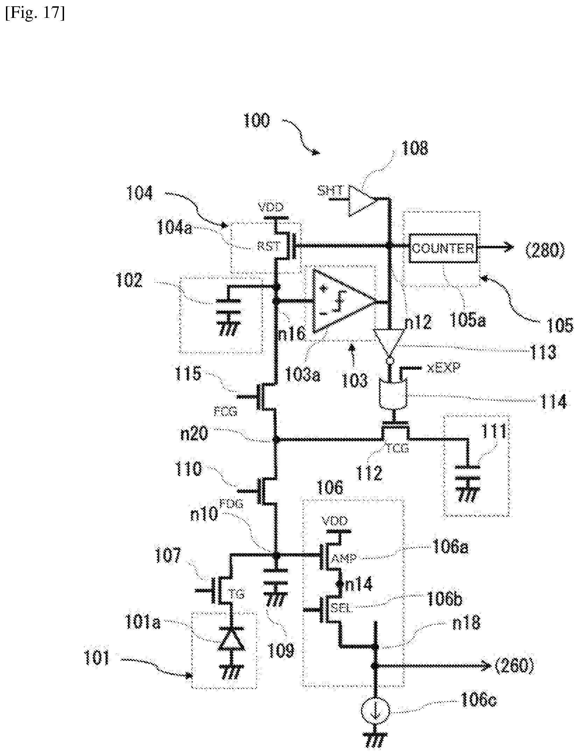

   Fig. 17 is a diagram illustrating a circuit configuration example of a pixel circuit 250 according to Modification 1 of the third embodiment.
[Fig. 18]

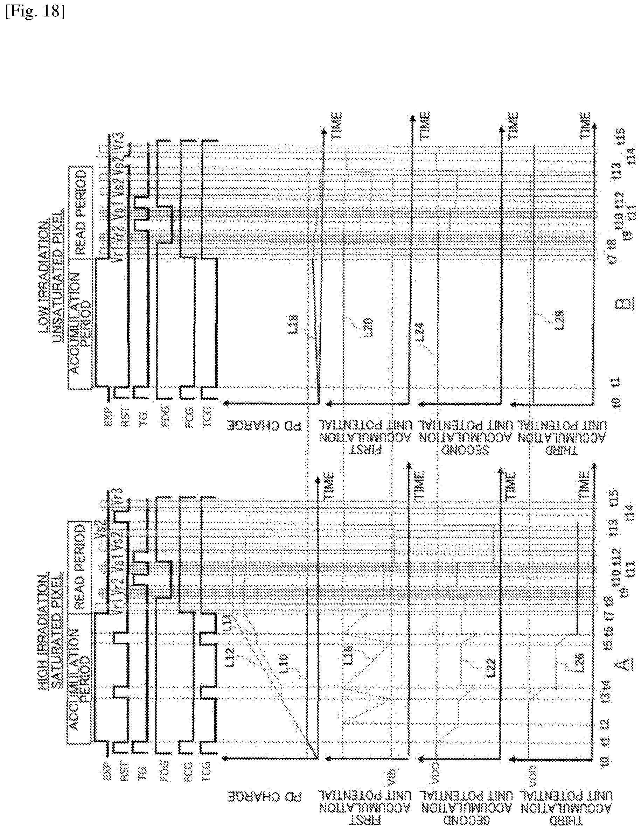

   Fig. 18 is a timing chart of an operation example according to Modification 1 of the third embodiment.
[Fig. 19]

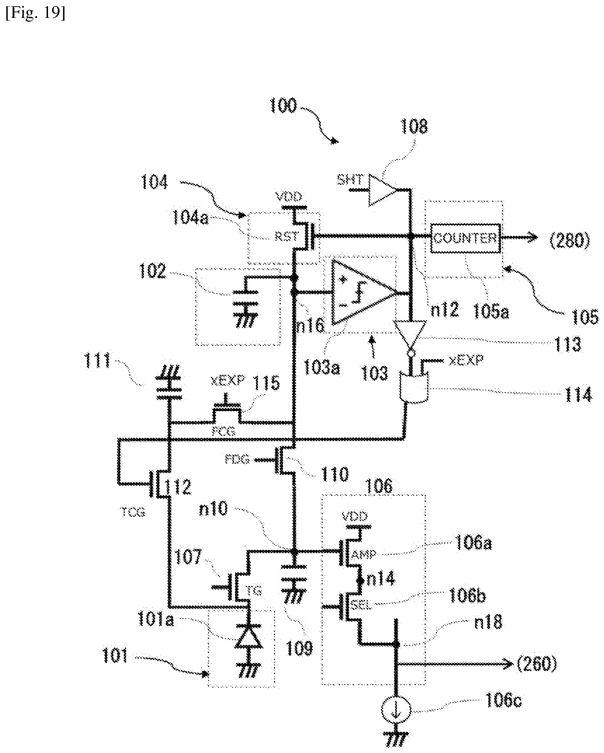

   Fig. 19 is a diagram illustrating a circuit configuration example of a pixel circuit 250 according to Modification 2 of the third embodiment.
[Fig. 20]

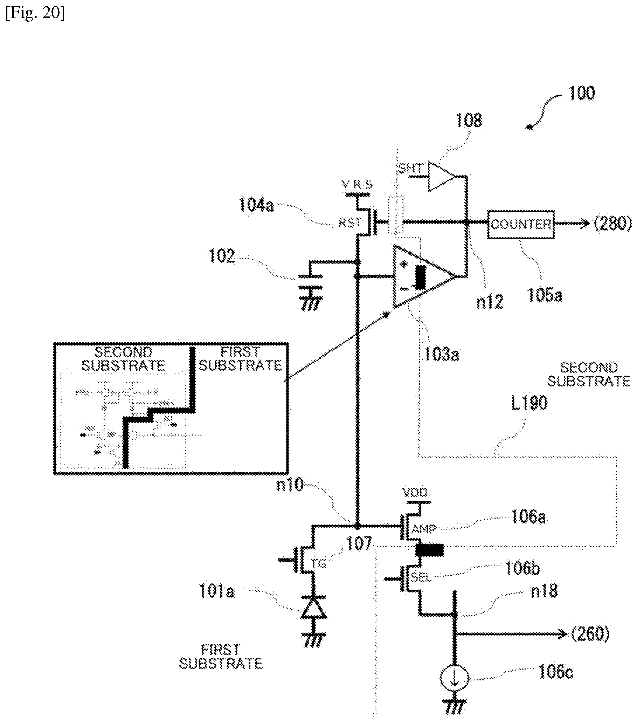

   Fig. 20 is a diagram illustrating a configuration example of a pixel circuit 250 according to Modification 3 of the first embodiment.
[Fig. 21]

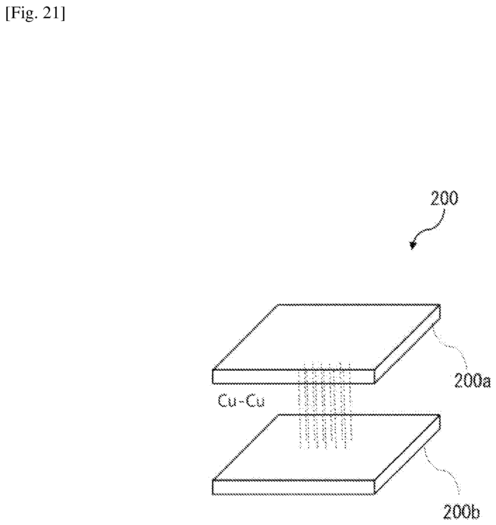

   Fig. 21 is a diagram illustrating a configuration example of a first substrate and a second substrate.
[Fig. 22]

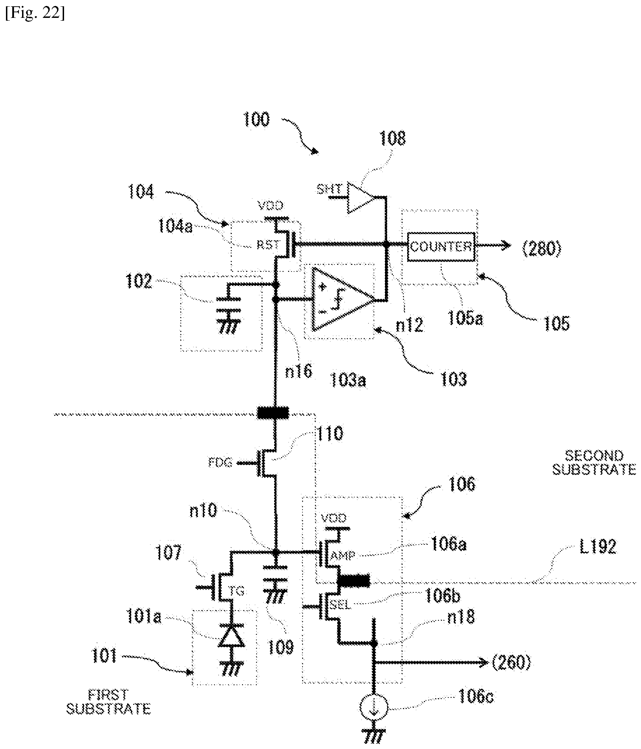

   Fig. 22 is a diagram illustrating a configuration example in which the pixel circuit 250 illustrated in Fig. 11 is configured of two substrates.
[Fig. 23]

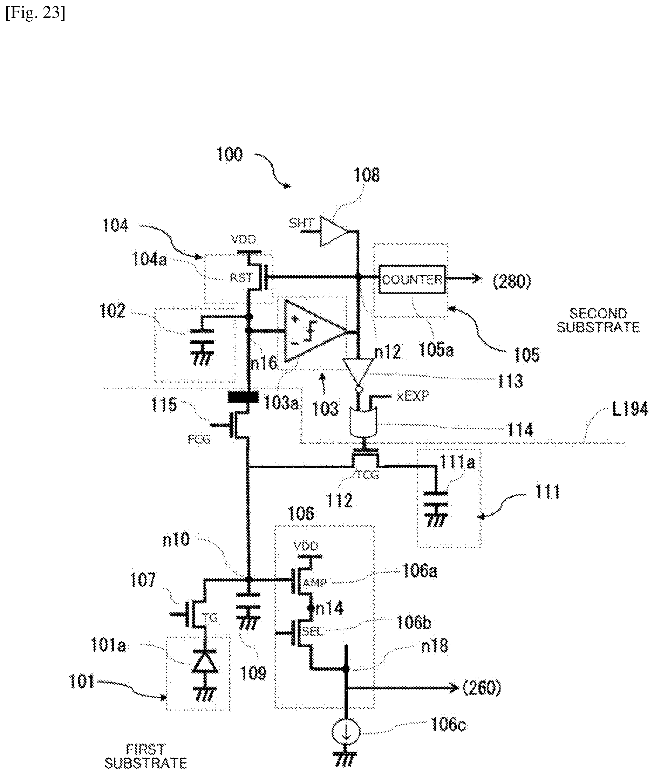

   Fig. 23 is a diagram illustrating a configuration example in which the pixel circuit 250 illustrated in Fig. 15 is configured of two substrates.
[Fig. 24]

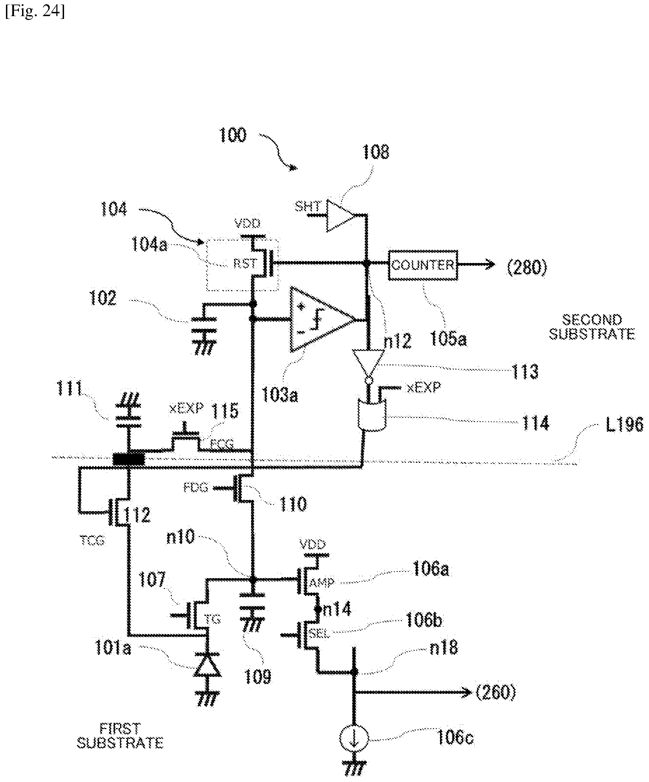

   Fig. 24 is a diagram illustrating a configuration example of the pixel circuit 250 illustrated in Fig. 19.
[Fig. 25]

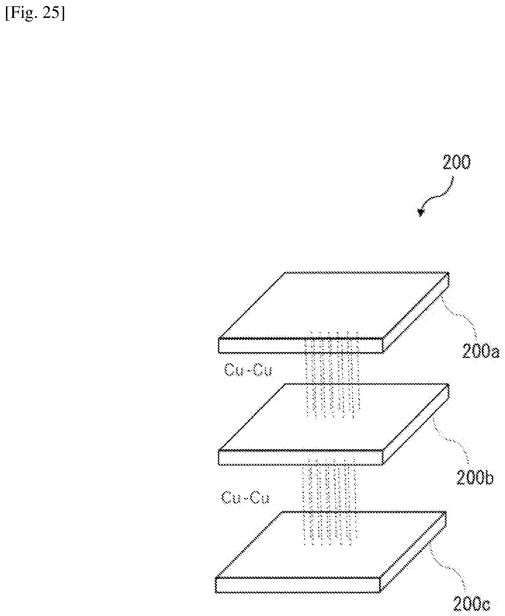

   Fig. 25 is a diagram illustrating a configuration example of a first substrate, a second substrate, and a third substrate.
[Fig. 26]

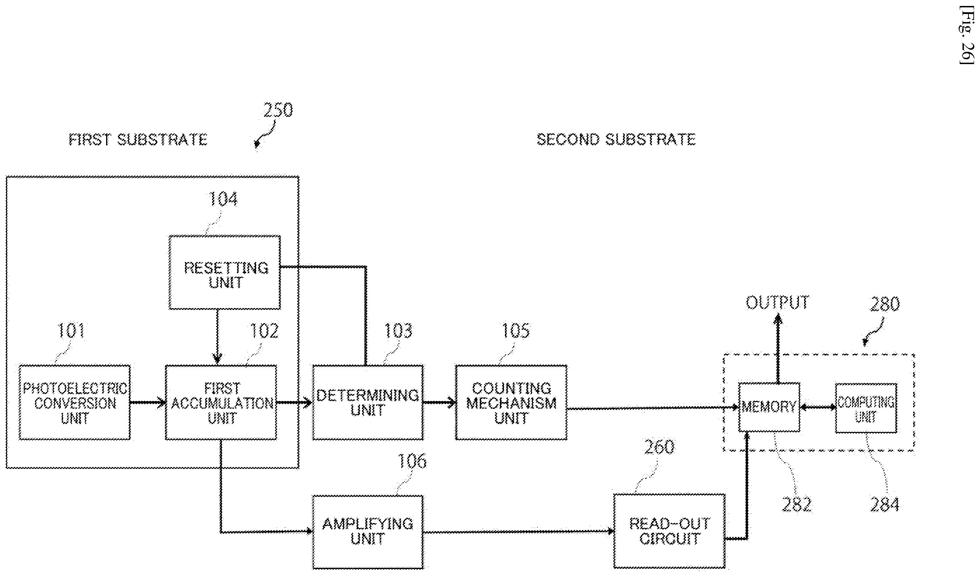

   Fig. 26 is a diagram illustrating a configuration example in which the pixel circuit 250 illustrated in Fig. 4 is configured of two substrates.
[Fig. 27]

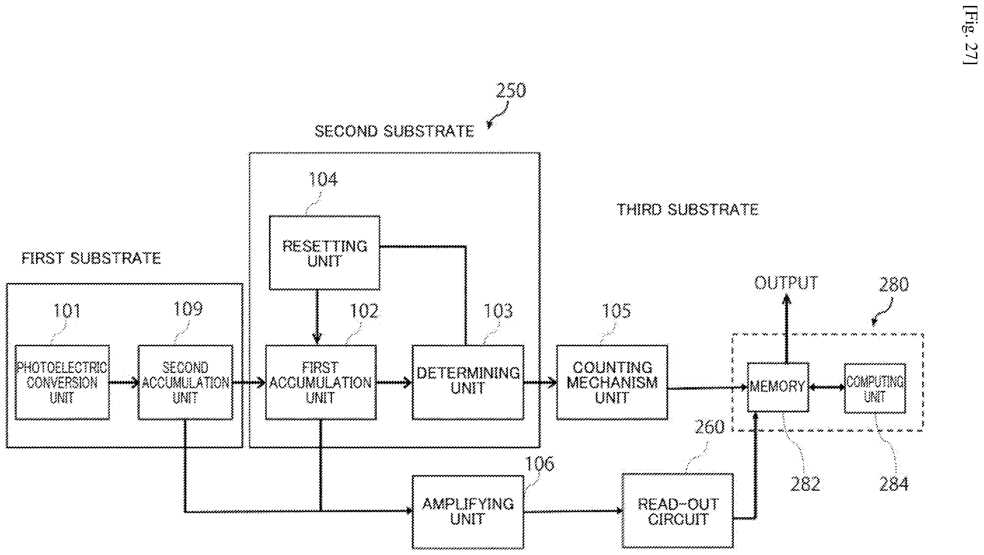

   Fig. 27 is a diagram illustrating a configuration example in which the pixel circuit 250 illustrated in Fig. 10 is configured of three substrates.
[Fig. 28]

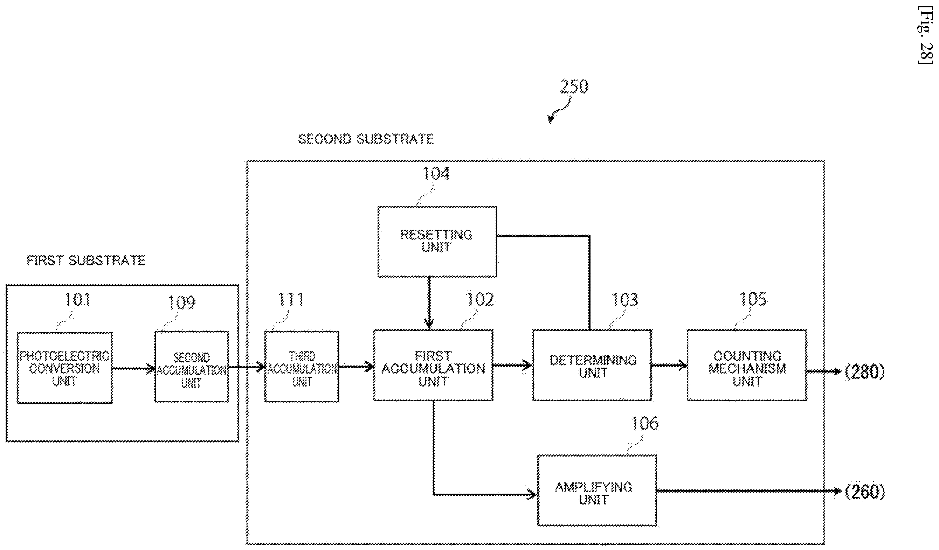

   Fig. 28 is a diagram illustrating a configuration example in which the pixel circuit 250 illustrated in Fig. 14 is configured of two substrates.
[Fig. 29]

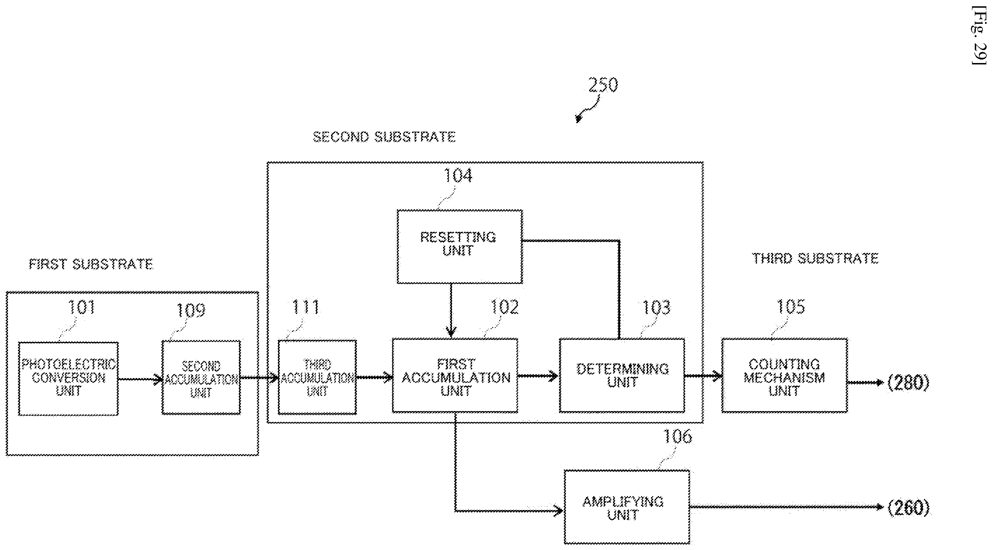

   Fig. 29 is a diagram illustrating a configuration example in which the pixel circuit 250 illustrated in Fig. 14 is configured of three substrates.
[Fig. 30]

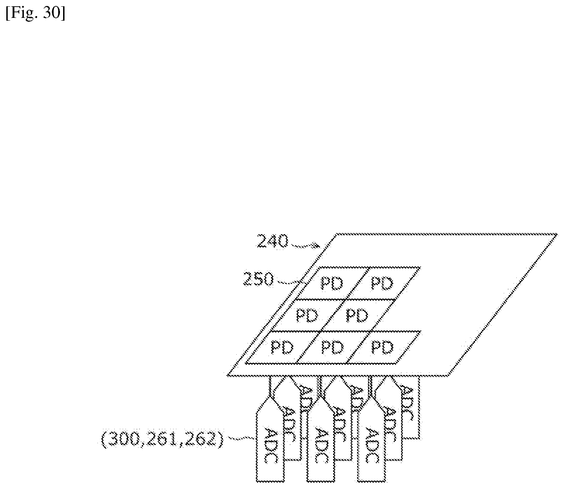

   Fig. 30 is a diagram schematically illustrating part of the image-capturing device 200.
[Fig. 31]

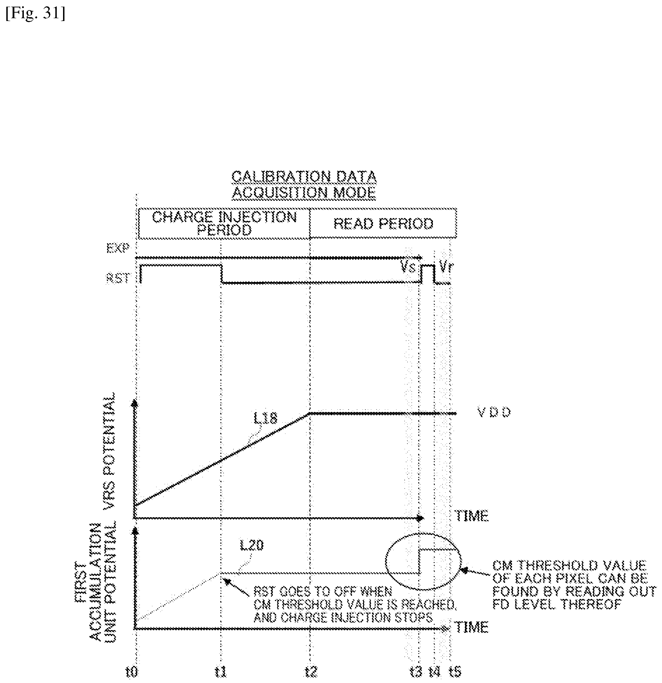

   Fig. 31 is a timing chart of an operation example in calibration mode.
[Fig. 32]

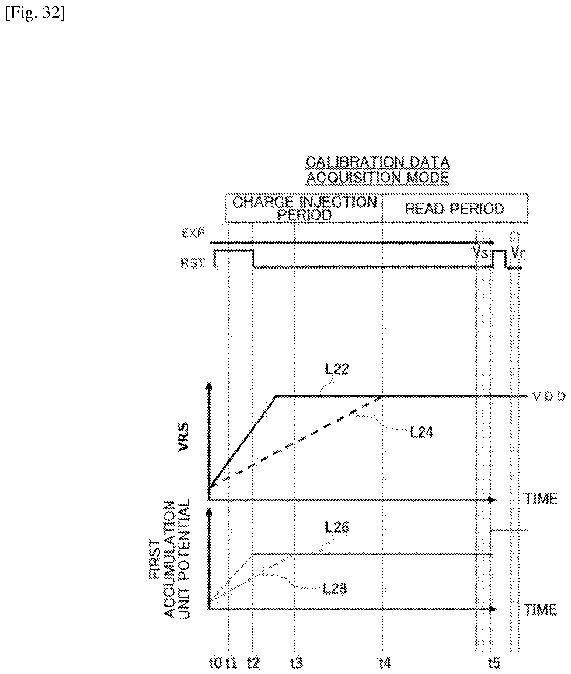

   Fig. 32 is a timing chart of an operation example in calibration mode.
[Fig. 33]

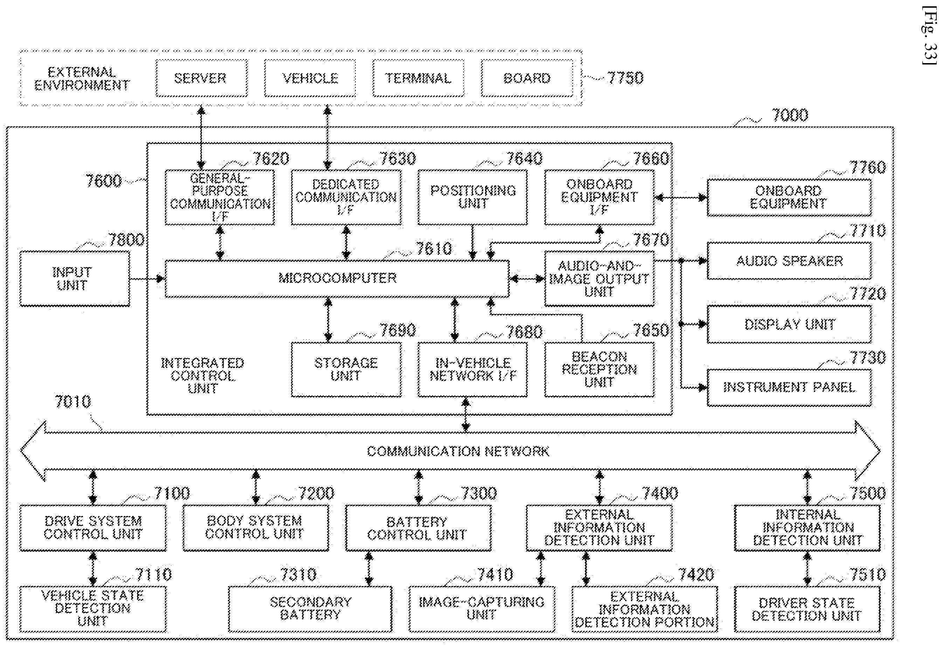

   Fig. 33 is a block diagram illustrating an example of a schematic configuration of a vehicle control system.
[Fig. 34]

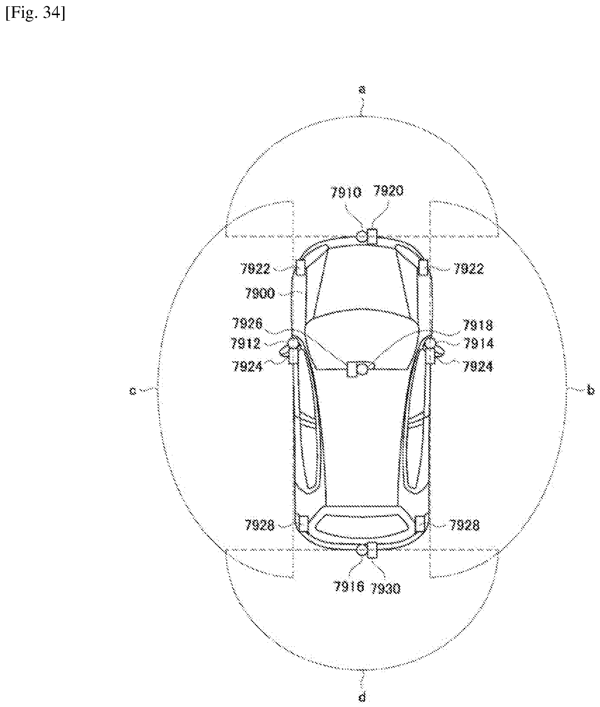

   Fig. 34 is an explanatory diagram illustrating an example of layout positions of an external information detection portion and an image-capturing unit.

### [Description of Embodiments]

Embodiments of a solid-state image-capturing device and an image-capturing apparatus will be described below with reference to the Figures. While primary configuration portions of the solid-state image-capturing device and the image-capturing apparatus will be mainly described below, there may be configuration portions and functions of the solid-state image-capturing device and the image-capturing apparatus that are not illustrated or described. The following description does not exclude the configuration portions and functions that are not illustrated or described.

### (First Embodiment)

Fig. 1 is a block diagram illustrating a configuration example of an image-capturing apparatus 1 according to a first embodiment of the present technology. This image-capturing apparatus 1 is an apparatus for capturing image data, and includes an optical unit 110, a solid-state image-capturing device 200, and a DSP (Digital Signal Processing) circuit 120. The image-capturing apparatus 1 further includes a display unit 130, an operating unit 140, a bus 150, frame memory 160, a storage unit 170, and a power source unit 180. The image-capturing apparatus 1 is assumed as being a camera installed in a smartphone, an in-vehicle camera, or the like.

The optical unit 110 collects light from a subject and guides the collected light to the solid-state image-capturing device 200. The solid-state image-capturing device 200 generates image data by photoelectric conversion. The solid-state image-capturing device 200 supplies the generated image data to the DSP circuit 120 via a signal line 209. The optical unit 110 is configured of a plurality of lenses, for example, and makes up an optical system.

The DSP circuit 120 subjects image data to predetermined signal processing. The DSP circuit 120 outputs the image data following processing to the frame memory 160 and so forth via the bus 150.

The display unit 130 displays image data. A liquid crystal panel or an organic EL (Electro Luminescence) panel, for example, is assumed as the display unit 130. The operating unit 140 generates operating signals in accordance with user operations.

The bus 150 is a common path for the optical unit 110, the solid-state image-capturing device 200, the DSP circuit 120, the display unit 130, the operating unit 140, the frame memory 160, the storage unit 170, and the power source unit 180 to exchange data with each other.

The frame memory 160 holds image data. The storage unit 170 stores various types of data, such as image data and so forth. The power source unit 180 supplies a power source to the solid-state image-capturing device 200, the DSP circuit 120, the display unit 130, and so forth.

### (Configuration Example of Solid-State Image-Capturing Device)

Fig. 2 is a block diagram illustrating a configuration example of the solid-state image-capturing device 200 according to the present embodiment. Fig. 3 is a diagram schematically illustrating connection of pixel circuits and a processing circuit.

As illustrated in Fig 2 and Fig. 3, the solid-state image-capturing device 200 includes a vertical scanning circuit 210, a timing control unit 220, a DAC (Digital to Analog Converter) 230, a pixel array unit 240, a read circuit 260, a horizontal scanning circuit 270, and a signal processing unit 280. A plurality of pixel circuits 250 are arrayed in a two-dimensional grid in the pixel array unit 240.

The vertical scanning circuit 210 sequentially selects and drives rows in the pixel array unit 240. The timing control unit 220 controls operation timings of the vertical scanning circuit 210, the DAC 230, the read circuit 260, and the horizontal scanning circuit 270, synchronously with vertical synch signals VSYNC.

The DAC 230 generates sawtooth-like ramp signals, which are supplied to the read circuit 260 as reference signals.

The pixel circuits 250 are circuits that perform photoelectric conversion under control of the vertical scanning circuit 210. The pixel circuits 250 count the number of times that a charge amount obtained by photoelectric conversion exceed a threshold value, and outputs digital signals including the counted number to the signal processing unit 280 via a horizontal signal line Lsh. Also, pixels 100 output analog remaining charge signals relating to remaining charge to the read circuit 260 as analog signals, via a vertical signal line Lsv.

An ADC (see Fig. 3) is disposed in the read circuit 260 for each column of pixel circuits 250. Each ADC converts pixel signals of the corresponding column into digital signals, which are output to the signal processing unit 280 under control of the horizontal scanning circuit 270. The horizontal scanning circuit 270 controls the read circuit 260 to sequentially output the digital signals. Note that in the present embodiment, the read circuit 260 may also be written as read-out circuit 260.

The signal processing unit 280 generates image signals of each of the pixels 100, using the counter values from the pixels 100 within the pixel array unit 240, and the remaining signal values of the pixels 100 supplied from the read circuit 260. The signal processing unit 280 outputs image signal values of the pixels 100 to the DSP circuit 120.

### (Configuration Example of Pixel Circuit)

A configuration example of the pixel circuit 250 according to a first example useful for understanding the invention (but not covered by the claims) will be described with reference to Fig. 4 and Fig. 5. Fig. 4 is a block diagram illustrating a configuration example of the pixel circuit 250. The pixel circuit 250 includes a photoelectric conversion unit 101, a first accumulation unit 102, a determining unit 103, a resetting unit 104, a counting mechanism unit 105, and an amplifying unit 106. Also, the signal processing unit 280 includes memory 282 and a computing unit 284.

The photoelectric conversion unit 101 generates a charge in accordance with light that is received. The photoelectric conversion unit 101 has a predetermined capacitor. The first accumulation unit 102 accumulates charge that exceeds the capacitance of the predetermined capacitor of the photoelectric conversion unit 101. Note that the first accumulation unit 102 according to the present embodiment corresponds to a first charge holding unit.

The determining unit 103 determines whether the potential of the first accumulation unit 102 has reached a predetermined value, and in a case of reaching the predetermined value, outputs a first signal to the resetting unit 104 and the counting mechanism unit 105. The resetting unit 104 resets the first accumulation unit 102 in accordance with the first signal, and discharges the accumulated charge in the first accumulation unit 102.

The counting mechanism unit 105 counts the number of times of input of the first signal, and outputs to the memory 282 of the signal processing unit 280. The memory 282 stores the counter number in storage regions corresponding to coordinates of the pixel circuit 250. Note that the initial value of the counting mechanism unit 105 following resetting is 0.

The amplifying unit 106 outputs analog residual charge signals to the read circuit 260 in accordance with residual charge that remains in the first accumulation unit 102 without being reset.

Thus, the charge generated by the photoelectric conversion unit 101 is accumulated in the first accumulation unit 102, and upon the determining unit 103 determining that this is a predetermined potential, a resetting action of the first accumulation unit 102 is performed. The counting mechanism unit 105 counts this as one count. The first accumulation unit 102 starts accumulation again. Such processing is repeated in an accumulation period.

Following the accumulation period ending, the amplifying unit 106 outputs an analog residual charge signal in accordance with the residual charge accumulated in the first accumulation unit 102 to the read circuit 260. The read circuit 260 outputs a digital signal Sa in accordance with the analog residual charge to the memory 282 of the signal processing unit 280. The memory 282 stores the digital signals Sa in a storage region corresponding to coordinates of each of the pixel circuits 250.

The potential accumulated in the first accumulation unit 102 at the time of resetting and the accumulated charge amount are correlated in advance. Accordingly, the charge amount generated during the accumulation period is (accumulated charge amount in first accumulation unit) × (number of times of resetting). Further, a pixel signal according to the residual charge at the first accumulation unit during the read period is output to the read circuit 260. Thus, the final generated charge amount is(accumulated charge amount in first accumulation unit) × (number of times of resetting) + (residual charge amount).

A computing unit 280b of the signal processing unit 280 computes a first image signal corresponding to the (accumulated charge amount in first accumulation unit) × (number of times of resetting) as K1 × (number of times of resetting), and computes a second image signal corresponding to the (residual charge amount) as K2 × (value of digital signal Sa). That is to say, the computing unit 280b of the signal processing unit 280 computes K1 × (number of times of resetting) + K2 × (value of digital signal Sa) for an image signal G(x, y) of the pixel circuit 250, and outputs to the memory 282. K1 and K2 are optional coefficients for matching dimensions. Coordinates (x, y) are positional coordinates of the pixel circuit 250, corresponding to the read row and the read column of the pixel array unit 240.

The memory 282 stores the image signal G(x, y) in a storage region corresponding to the coordinates (x, y) of each pixel circuit 250. The memory 282 then outputs the image signal G(x, y) corresponding to the coordinates of each pixel circuit 250 to the DSP circuit 120 as image data.

Fig. 5 is a diagram illustrating a circuit configuration example of the pixel circuit 250. The photoelectric conversion unit 101 is configured including a photoelectric conversion element 101a, and the first accumulation unit 102 is configured of a capacitor, for example. The first accumulation unit 102 is a floating diffusion (FD), for example.

Also, the determining unit 103 is configured including a comparator 103a, the resetting unit 104 is configured including a reset transistor 104a, and the counting mechanism unit 105 is configured including a counter 105a. Moreover, the amplifying unit 106 has an amplifying transistor 106a and a selecting transistor 106b. That is to say, as illustrated in Fig. 5, the pixel circuit 250 has the photoelectric conversion element 101a, the first accumulation unit 102, the comparator 103a, the reset transistor 104a, the counter 105a, the amplifying transistor 106a, the selecting transistor 106b, a transfer transistor 107, and an counter reset circuit 108.

The reset transistor 104a, the amplifying transistor 106a, the selecting transistor 106b, and the transfer transistor 107 are configured of N-channel MOS transistors, for example. Driving signals TG, RST, and SEL are then supplied to gate electrodes thereof. These drive signals are pulse signals that are in an active state (on state) when at a high level state, and that are in an inactive state (off state) when at a low level state.

As illustrated in Fig 5, the photoelectric conversion element 101a is made of a PN junction photodiode, for example, receives light from a subject, and generates a charge by photoelectric conversion in accordance with the amount of light received therefrom, and stores the charge.

The transfer transistor 107 is connected between the photoelectric conversion element 101a and the first accumulation unit 102 via a node n10. Residual charge accumulated in the photoelectric conversion element 101a is transferred to the first accumulation unit 102 in accordance with the driving signal TG applied to the gate electrode of the transfer transistor 107. Note that in the present embodiment, the driving signal TG is driven in a low-level state while accumulating the charge, and the accumulated charge is accumulated in the first accumulation unit 102 as a leak charge via the transfer transistor 107.

An input terminal of the comparator 103a is connected to the node n10, and an output terminal is connected to a gate terminal of the reset transistor 104a via a node n12. The comparator 103a outputs a first signal when the potential of the node n10 crosses a predetermined threshold value potential Vth to the lower side. This first signal is a high-level signal, but goes to a low-level signal when the first accumulation unit 102 is reset, and accordingly becomes a pulsed signal.

The reset transistor 104a is a device that initializes (resets) the first accumulation unit 102 as appropriate, with the drain connected to a power source of power source potential VDD, and the source connected to the first accumulation unit 102 via the node n10. The first signal is applied to the gate electrode of the reset transistor 104a as the driving signal RST. Upon the driving signal RST being applied, the reset transistor 104a is in a conducting state, and the potential of the node n10 is reset to the level of the power source potential VDD.

An input terminal of the counter 105a is connected to the output terminal of the comparator 103a via the node n12, and an output terminal is connected to the signal processing unit 280. The counter 105a increments the counter by 1 each time the first signal is input, and outputs to the signal processing unit 280.

A gate electrode of the amplifying transistor 106a is connected to the first accumulation unit 102 via the node n10, the drain is connected to the power source of the power source potential VDD, and is an input portion of a source-follower circuit that reads the residual charge of the first accumulation unit 102 and the photoelectric conversion unit 101. That is to say, the amplifying transistor 106a makes up a source-follower circuit with a constant-current source 106c connected to one end of the vertical signal line Lsv, by the source thereof being connected to the vertical signal line Lsv via the selecting transistor 106b.

The selecting transistor 106b is connected between the source of the amplifying transistor 106a and the vertical signal line, and the driving signal SEL is supplied to the gate electrode of the selecting transistor 106b as a selection signal. When the driving signal SEL is in an active state, the selecting transistor 106b goes to a conducting state, and the pixel regarding which the selecting transistor 106b is provided is in a selected state. When the pixel is in a selected state, the signal output from the amplifying transistor 106a is read by the read circuit 260 via the vertical signal line.

The counter reset circuit 108 supplies an initialization signal SHT to the node n12. Upon the counter 105a receiving the initialization signal SHT, the counter value is initialized to 0. Also, at each of the pixel circuits 250, a plurality of driving lines are laid for each pixel row, for example. The driving signals TG, RST, SEL, and SHT are supplied into the pixel from the vertical scanning circuit 210 through the plurality of driving lines serving as pixel driving lines. Note that while a configuration is made in the present embodiment in which the counter 105a and the read circuit 260 are provided for each pixel circuit 250, this is not limiting. For example, a plurality of the photoelectric conversion units 101 may be connected to the node n10 in parallel, with the counter 105a and the read circuit 260 being provided in increments shared by pixels. In some embodiments, a transistor may be in the conducting state when a threshold voltage of the transistor is exceeded by voltages applied to the terminals of the transistor. For example, a metal-oxide-semiconductor (MOS) field effect transistor (FET) may be in the conducting state when the difference between the gate terminal and the source terminal exceeds a threshold (e.g., a positive voltage threshold for an n-channel transistor or a negative voltage threshold for a p-channel transistor). In some embodiments, a transistor may be in the non-conducting state when the threshold voltage of the transistor is not exceeded by voltages applied to the terminals of the transistor. It should be appreciated, however, that a transistor in the non-conducting state may still conduct parasitic amounts of leakage current.

### (Configuration Example of Column Signal Processing Unit)

Fig. 6 is a block diagram illustrating a configuration example of the read circuit 260 according to the first embodiment of the present technology. This read circuit 260 has a comparator 300, a counter 261, and a latch 262 disposed for each column. In a case in which the number of columns is N (N is an integer), N each of the comparator 300, the counter 261, and the latch 262 are disposed. Note that one set of the comparator 300, the counter 261, and the latch 262 according to the present embodiment correspond to an ADC.

The comparator 300 compares reference signals from the DAC 230 and pixel signals from the corresponding column. Potential of the reference signal hereinafter is reference potential V_{RMP}, and potential of a vertical signal line 259 that transmits pixel signals hereinafter is input potential V_{VSL}. This comparator 300 supplies output signals VCO indicating comparison results to the counter 261 of the corresponding column.

Also, the level of the pixel signal when the pixel circuit 250 is initialized (i.e., input potential V_{VSL}) will be referred to as "Vr level", for example, and the level of the pixel signal when the residual charge accumulated in the photoelectric conversion element 101a is transferred to the node n10 will be referred to as "Vs level", for example. That is to say, in the present embodiment, there are cases in which the level that is the reference for comparison will be referred to as "Vr level" and the level that is the object of comparison will be referred to as "Vs level". Note that in the present embodiment, there are cases in which a first "Vr1 level" is taken as the reference for comparison, and a second "Vr2 level" that is different from the Vr1 level is taken as the object of comparison. In the same way, there are cases in which a first "Vs1 level" is taken as the reference for comparison, and a second "Vs2 level" that is different from the Vs1 level is taken as the object of comparison.

Also, there are cases in which a case, where information relating to the residual charge (corresponding to analog image signals) is included in both the level serving as the reference for comparison and the level that is the object of comparison, will be referred to as CDS (Correlated Double Sampling) driving. Meanwhile, there are driving examples of cases, in which a case where information relating to the residual charge (corresponding to analog image signals) is not included in at least one of the level serving as the reference for comparison and the level that is the object of comparison, will be referred to as DDS (Double Data Sampling) driving. Generally, CDS driving tends to exhibit a better SN ratio in digital signals following digital conversion, as compared to DDS driving.

The counter 261 counts a count value over a period until the output signal VCO reverses. This counter 261 counts down over a period until the output signal VCO reverses corresponds to the reset level, and counts up over a period until the output signal VCO reverses corresponds to the signal level, for example. This realizes processing for finding the difference between the Vr level and the Vs level, for example.

The counter 261 then causes the latch 262 to hold a digital signal indicating the count value. The comparator 300 and the counter 261 realize AD conversion processing of converting analog pixel signals into digital signals. That is to say, the comparator 300 and the counter 261 function as an ADC. Such an ADC that uses a comparator and a counter is generally referred to as a single-slope type ADC. The latch 262 is for holding digital signals. The latch 262 outputs the digital signals held therein under control of the horizontal scanning circuit 270.

Fig. 7 is a timing chart of a processing example according to the present embodiment. Fig. A is a state example under high irradiation and accordingly the counter 105a counts one time or more, and Fig. B is a state example under low irradiation and accordingly the counter 105a does not count. The horizontal axis represents time, and the vertical axis represents the driving signals EXP, RST, TG, accumulated charge L10 of the photoelectric conversion element 101a, and potential L16 of the first accumulation unit 102. Line L10 indicates the charge within the capacitance of the photoelectric conversion element 101a. Line L12 indicates the generated charge amount of the photoelectric conversion element 101a, and line L14 represents the charge amount obtained by subtracting the charge not accumulated in the first accumulation unit 102 when resetting from the line L12. The driving signal EXP represents charge accumulation period when at high level, and represents read period when at low level.

As illustrated in Fig. A, in a high irradiation state, the driving signals RST and TG go to high level at time t0, and the photoelectric conversion element 101a and the first accumulation unit 102 are initialized. That is to say, the potential of the node n10 is power source potential VDD.

Next, at time t1, the driving signals RST and TG go to low level, and the driving signal EXP goes to high level. Accordingly, the charge generated by the photoelectric conversion element 101a exceeds the capacitance, and is accumulated at the first accumulation unit 102. Then, at time t1, the potential at the node n10 of the first accumulation unit 102 begins to drop. Then at time t2, threshold value potential Vth of the comparator 103a is reached for the first time. Accordingly, the comparator 103a outputs the first signal, and the counter 105a increments the count value by 1. At the same time, the first signal that is the driving signal RST is at the high level, and accordingly, the reset transistor 104a goes to a conducting state, and the potential of the node n10 of the first accumulation unit 102 is reset to the power source potential VDD.

Such processing is repeated, and at time t6 the driving signal EXP goes to low level and the read period is started. Next, at time t7, the driving signal TG goes to high level, the accumulated charge of the photoelectric conversion element 101a is transferred to the first accumulation unit 102, and the potential of the node n10 corresponds to the potential of the remaining charge. Then at time t8, the driving signal RST goes to high level and the potential of the node n10 of the first accumulation unit 102 is reset to the power source potential VDD.

Also, between time t7 and t8, an analog signal potential corresponding to the residual charge is output to the read circuit 260 as Vs level. Conversely, between time t8 and t9, an analog signal potential corresponding to dark current is output to the read circuit 260 as Vr level. Thus, the read circuit 260 converts the difference between the potential corresponding to the Vs level and the potential corresponding to the Vr level into the digital signal Sa, and outputs to the signal processing unit 280.

The computing unit 280b of the signal processing unit 280 then computes K1 × (number of times of resetting: 2 times) + K2 × (value of digital signal Sa) as the image signal G(x, y) of the pixel circuit 250, and outputs to the memory 282. The memory 282 stores the image signal G(x, y) in the storage region that corresponds to the coordinates (x, y) of each pixel circuit 250. The memory 282 then outputs the image signal G(x, y) corresponding to the coordinates of each pixel circuit 250 (x, y) to the DSP circuit 120 as image data.

Conversely, as illustrated in Fig. B, in a low irradiation state, the driving signals RST and TG go to high level at time t0, and the photoelectric conversion element 101a and the first accumulation unit 102 are initialized. That is to say, the potential of the node n10 is the power source potential VDD.

Subsequently, at time t1, the driving signals RST and TG go to low level, and the driving signal EXP goes to high level. Accordingly, a charge is generated at the photoelectric conversion element 101a, and charge amount L18 continues increasing, but the charge amount generated in the capacitance within the photoelectric conversion element 101a is maintained.

At time t6, the driving signal EXP goes to low level and the read period is started. Subsequently, at time t7, the driving signal TG goes to high level, the accumulated charge of the photoelectric conversion element 101a is transferred to the first accumulation unit 102, and the potential of the node n10 corresponds to the potential of the remaining charge. Then at time t8, the driving signal RST goes to high, and the potential of the node n10 of the first accumulation unit 102 is reset to the power source potential VDD.

Also, analog signal potential corresponding to the residual charge is output to the read circuit 260 as Vs level between time t7 and t8. Further, analog signal potential corresponding to dark current is output to the read circuit 260 as Vr level between time t8 and t9. Accordingly, the read circuit 260 converts the difference between the potential corresponding to the Vs level and the potential corresponding to the Vr level into the digital signal Sa, and outputs to the signal processing unit 280.

The computing unit 280b of the signal processing unit 280 then computes K1 × (number of times of resetting: 0 times) + K2 × (value of digital signal Sa) as the image signal G(x, y) of the pixel circuit 250, and outputs to the memory 282. The memory 282 stores the image signal G(x, y) in the storage region that corresponds to the coordinates (x, y) of each pixel circuit 250. The memory 282 then outputs the image signal G(x, y) corresponding to the coordinates (x, y) of each pixel circuit 250 to the DSP circuit 120 as image data.

As described above, according to the present embodiment, the charge generated at the photoelectric conversion element 101a is accumulated in the first accumulation unit 102, the first signal is output each time the comparator 103a reaches the predetermined threshold value potential Vth, the first accumulation unit 102 is reset, and further the counter 105a increments the count value by 1. Accordingly, even in a case in which the charge generated at the photoelectric conversion element 101a exceeds the capacitor of the first accumulation unit 102, accumulation of the charge to the first accumulation unit 102 can be continued, and further, the amount of the charge generated at the photoelectric conversion element 101a can be calculated from the count value. Further, the residual charge of the photoelectric conversion element 101a and the first accumulation unit 102 is read out to the read circuit 260 by the amplifying unit 106 as analog potential, and is converted into a digital value. Accordingly, image signals including the residual charge can be generated without saturation of the dynamic range, even under high irradiation.

Also, even in a case of low irradiation and the capacitance of the first accumulation unit 102 is not exceeded even once, the residual charge of the photoelectric conversion element 101a and the first accumulation unit 102 is read out to the read circuit 260 by the amplifying unit 106 as analog potential, and is converted into a digital value. Accordingly, image signals including the residual charge can be generated even in a case of low irradiation in which the capacitance of the first accumulation unit 102 is not exceeded even once.

### (Modification 1 of First Embodiment is an example useful for understanding the invention and not an embodiment of the claimed invention)

A solid-state image-capturing device 200 according to Modification 1 of the first embodiment differs from the solid-state image-capturing device 200 according to the first embodiment with respect to the point that CDS (Correlated Double Sampling) driving is further enabled. Points of difference as to the solid-state image-capturing device 200 according to the first embodiment will be described below.

Fig. 8 is a timing chart of a processing example according to Modification 1 of the first embodiment. Fig. A is a state example under high irradiation and accordingly the counter 105a counts one time or more, and Fig. B is a state example under low irradiation and accordingly the counter 105a does not count. This differs from the solid-state image-capturing device 200 according to the first embodiment with respect to the point that the Vr level is read out between time t6 and t7, and the Vs level is read out between time t7 and t8.

Fig. 9 is a diagram conceptually describing read potential at Vr, Vs, Vs, and Vr levels in Fig. 8. The vertical axis represents the absolute value in difference with respect to potential VDD. As shown in Fig. 8, the potential of the Vr level between time t6 and t7 is that prior to the driving signal TG going to high level. That is to say, this corresponds to the potential prior to the accumulated charge of the photoelectric conversion element 101a being transferred to the first accumulation unit 102. Potential V10 is the potential of the first accumulation unit 102, and potential V12 is noise component.

The potential of the Vs level between time t7 and t8 corresponds to the potential following the driving signal TG going to high level and the accumulated charge of the photoelectric conversion element 101a being transferred to the first accumulation unit 102. The difference in these potentials is potential V14, which corresponds to the accumulated charge of the photoelectric conversion element 101a minus the potential V12 of the noise component. The capacitor of the photoelectric conversion element 101a and the capacitor of the first accumulation unit 102 are known, and accordingly the potential V10 of the first accumulation unit 102 can also be computed on the basis of the potential V14 corresponding to the accumulated charge of the photoelectric conversion element 101a. Also, the potential of the Vr level following time t9 is the potential V16 of the noise component following the driving signal TG going to high level and the accumulated charge of the photoelectric conversion element 101a being reset.

Accordingly, the computing unit 280b of the signal processing unit 280 is capable of computing a digital signal Sb corresponding to the residual charge from the results of AD conversion performed the first time. That is to say, a signal value S of the digital signal Sa can be obtained by multiplying the signal value of the digital signal Sb in the AD conversion performed the first time by a coefficient K3. Accordingly, the computing unit 280b computes K1 × (number of times of resetting: 2 times) + K2 × K3 × (signal value of digital signal Sb) as the image signal G(x, y) of the pixel circuit 250, and outputs to the memory 282. The memory 282 stores the image signal G(x, y) in the storage region that corresponds to the coordinates (x, y) of each pixel circuit 250. The memory 282 then outputs the image signal G(x, y) corresponding to the coordinates (x, y) of each pixel circuit 250 to the DSP circuit 120 as image data.

As described above, according to the present embodiment, performing CDS (Correlated Double Sampling) driving is further enabled, and digital signals corresponding to the residual charge can be generated with noise suppressed.

### (Modification 2 of First Embodiment is an example useful for understanding the invention and not an embodiment of the claimed invention)

A solid-state image-capturing device 200 according to Modification 2 of the first embodiment differs from the solid-state image-capturing device 200 according to the first embodiment with respect to the point that the first accumulation unit 102 is configured as a MIM (Metal-Insulator-Metal) capacitance. Points of difference as to the solid-state image-capturing device 200 according to the first embodiment will be described below. Configuring the first accumulation unit 102 as a MIM (Metal-Insulator-Metal) capacitance enables the capacitance value to be easily raised by changing the type of insulating film. Variance in determination made by the determining unit 103 as the first accumulation unit 102 becomes larger can be suppressed. Also, in conjunction with miniaturization, a high-aspect-ratio protruding concave structure, cylinder structure, or simple stack structure may be used for the first accumulation unit 102, to gain high capacitance with a small area.

### (Second Embodiment)

A solid-state image-capturing device 200 according to a second embodiment differs from the solid-state image-capturing device 200 according to the first embodiment with respect to the point of further including a second accumulation unit 109. Points of difference as to the solid-state image-capturing device 200 according to the first embodiment will be described below.

### (Configuration Example of Pixel Circuit)

A configuration example of the pixel circuit 250 according to the present embodiment will be described with reference to Fig. 10 and Fig. 11. Fig. 10 is a block diagram illustrating a configuration example of a pixel circuit 250 according to the second embodiment. The pixel circuit 250 differs from the pixel circuit 250 according to the first embodiment by further including the second accumulation unit 109. The capacitor capacitance of the second accumulation unit 109 is configured to be smaller than the capacitor capacitance of the first accumulation unit 102.

The second accumulation unit 109 is connected in parallel to the first accumulation unit 102 when accumulating charge. Accordingly, the capacitor capacitance for accumulating charges can be increased for when accumulating charges. Note that the second accumulation unit 109 according to the present embodiment corresponds to a second charge holding unit.

Conversely, when reading out the residual charge, the first accumulation unit 102 and the second accumulation unit 109 are electrically non-connected, and the charge of the photoelectric conversion unit 101 is transferred to the second accumulation unit 109 alone. Accordingly, an analog residual charge signal corresponding to the residual charge in the second accumulation unit 109 is output to the read-out circuit 260. At this time, the capacitor capacitance of the second accumulation unit 109 is smaller than the capacitor capacitance of the first accumulation unit 102, and it is known that the SN ratio of the analog residual charge signal corresponding to the second accumulation unit 109 is better than that of the analog residual charge signal corresponding to the first accumulation unit 102.

Fig. 11 is a diagram illustrating a circuit configuration example of the pixel circuit 250 according to the second embodiment. A second capacitor 109a is connected to the node n10. The second capacitor 109a is a floating diffusion, for example. A capacitance connecting transistor 110 is connected between the node n10 and a node n16 to which the first accumulation unit 102 is connected.

The capacitance connecting transistor 110 is configured of an N-channel MOS transistor, for example. A driving signal FDG is supplied to the gate electrode. This driving signal is a pulsed signal that is in an active state (on state) when at a high level state, and in an inactive state (off state) when at a low level state.

The capacitance connecting transistor 110 is supplied with high-level driving signal FDG when accumulating charge, and is in an active state (on state). Accordingly, the first accumulation unit 102 and the second capacitor 109a are in a state of being connected in parallel.

Conversely, low-level driving signal FDG is supplied when reading the residual charge, and is in an inactive state (off state). Accordingly, the first accumulation unit 102 and the second capacitor 109a are electrically non-connected.

### (Operation Example)

Fig. 12 is a timing chart of an operation example according to the second embodiment. Fig. A is a state example under high irradiation and accordingly the counter 105a counts up one time or more, and Fig. B is a state example under low irradiation and accordingly the counter 105a does not count up.

The horizontal axis represents time, and the vertical axis represents the driving signals EXP, RST, TG, FDG, accumulated charge L10 and L18 of the photoelectric conversion element 101a, potential L16 and L20 of the first accumulation unit 102, and potential L22 and L24 of the second accumulation unit 109.

As shown in Fig. A, in a high irradiation state, the driving signals RST, TG, and FDG go to high level at time t0, and the photoelectric conversion element 101a, the first accumulation unit 102, and the second accumulation unit 109 are initialized. That is to say, the potential of the node n10 is power source potential VDD. At this time, the driving signal FDG is at high level, and accordingly the first accumulation unit 102 and the second accumulation unit 109 are connected in parallel and are at the potential of the node n10.

Next, at time t1, the driving signals RST and TG go to low level, and the driving signal EXP goes to high level. Accordingly, the charge generated by the photoelectric conversion element 101a is accumulated at the first accumulation unit 102 and the second accumulation unit 109, and the potential at the node n10 of the first accumulation unit 102 and the second accumulation unit 109 begins to drop. Then at time t2, threshold value potential Vth of the comparator 103a is reached for the first time. Accordingly, the comparator 103a outputs the first signal, and the counter 105a increments the count value by 1. At the same time, the first signal that is the driving signal RST is at the high level, and accordingly, the reset transistor 104a goes to a conducting state, and the potential of the node n10 of the first accumulation unit 102 is reset to power source potential VDD.

Such processing is repeated, and at time t6 the driving signal EXP goes to low level and the read period is started. Next, at time t7, the driving signal FDG goes to low level, and the first accumulation unit 102 and the second accumulation unit 109 are in an electrically non-connected state therebetween.

Subsequently, at time t8, the driving signal TG goes to high level, the accumulated charge of the photoelectric conversion element 101a is transferred to the second accumulation unit 109, and the potential of the node n10 corresponds to the potential of the remaining charge. Then at time t9, the driving signal TG goes to low level, and the photoelectric conversion element 101a and the second accumulation unit 109 are in an electrically non-connected state therebetween.

Next, at time t10, the driving signals FDG and TG go to high level, the accumulated charge of the photoelectric conversion element 101a is transferred to the first accumulation unit 102 and the second accumulation unit 109, at time t11 the driving signal TG goes to low level, and the photoelectric conversion element 101a, the first accumulation unit 102, and the second accumulation unit 109 are in an electrically non-connected state with each other.

Next, at time t12, the driving signal RST goes to high level, and the first accumulation unit 102 and the second accumulation unit 109 are reset, and go to the power source potential VDD. Then at time t13, the driving signal RST goes to low level, and a time t14, the driving signal FDG goes to low level

Also, between time t7 and t8, an analog residual charge signal of the second accumulation unit 109 is output to the read-out circuit 260 as Vr level. Further, between time t9 and t10, an analog residual charge signal of the second accumulation unit 109 to which the accumulated charge of the photoelectric conversion element 101a has been added is output to the read-out circuit 260 as Vs level. Accordingly, the read-out circuit 260 converts the difference between the potential corresponding to the Vs level and the potential corresponding to the Vr level into a digital residual charge signal Sa1, and outputs to the signal processing unit 280. That is to say, the digital residual charge signal Sa1 is a signal corresponding to the residual charge of the photoelectric conversion element 101a. The capacitance of the photoelectric conversion element 101a and the capacitances of the first accumulation unit 102 and the second accumulation unit 109 are known, and accordingly a value corresponding to the entire residual charge at the time of ending the accumulation period can be computed from the digital residual charge signal Sa1.

The computing unit 280b of the signal processing unit 280 then computes K1 × (number of times of resetting: 2 times) + K4 × (signal value of digital residual charge signal Sa1) as the image signal G(x, y) of the pixel circuit 250, and outputs to the memory 282. The memory 282 stores the image signal in the storage region that corresponds to the coordinates of each pixel circuit 250. The memory 282 then outputs the image signal G(x, y) corresponding to the coordinates of each pixel circuit 250 to the DSP circuit 120 as image data. K4 is a coefficient.

Also, between time t11 and t12, an analog residual charge signal corresponding to the entirety of residual charges, obtained by adding the residual charge of the photoelectric conversion element 101a to the residual charge of the first accumulation unit 102 and the second accumulation unit 109, is output to the read-out circuit 260 as the Vs level. Further, between time t13 and t14, an analog residual charge signal corresponding to the accumulated charge of the first accumulation unit 102 and the second accumulation unit 109 following resetting is output to the read-out circuit 260 as the Vr level. Accordingly, the read-out circuit 260 converts the difference between the potential corresponding to the Vs level and the potential corresponding to the Vr level into a digital residual charge signal Sa2, and outputs to the signal processing unit 280. That is to say, the digital residual charge signal Sa2 is a signal corresponding to the entirety of residual charges. The computing unit 280b of the signal processing unit 280 is capable of computing K1 × (number of times of resetting: 2 times) + K5 × (signal value of digital residual charge signal Sa2) as the image signal G(x, y) of the pixel circuit 250. K5 is a coefficient. Note however, that the image signal G(x, y) computed by the level signals of the Vs level and the Vr level at the first time has a better SN ratio, as described earlier.

Conversely, as shown in Fig. B, in a low irradiation state, the driving signals RST, TG, and FDG go to high level at time t0, and the photoelectric conversion element 101a, the first accumulation unit 102, and the second accumulation unit 109 are initialized. That is to say, the potential of the node n10 is the power source potential VDD. At this time, the driving signal FDG is at high level, and accordingly the first accumulation unit 102 and the second accumulation unit 109 are connected in parallel, and are at the potential of the node n10.

Subsequently, at time t1, the driving signals RST and TG go to low level, and the driving signal EXP goes to high level. Accordingly, a charge is generated at the photoelectric conversion element 101a, and the charge amount L18 continues increasing, but the charge amount generated in the capacitance within the photoelectric conversion element 101a is maintained. Accordingly, the potentials L20 and L24 of the first accumulation unit 102 and the second accumulation unit 109 are each maintained at the initial potential VDD.

At time t6, the driving signal EXP goes to low level, and the read period is started. Subsequently, at time t7, the driving signal FDG goes to low level, and the first accumulation unit 102 and the second accumulation unit 109 are in an electrically non-connected state therebetween.

Subsequently, at time t8, the driving signal TG goes to high level, the accumulated charge of the photoelectric conversion element 101a is transferred to the second accumulation unit 109, and the potential of the node n10 corresponds to the potential of the remaining charge. Then at time t9, the driving signal TG goes to low level, and the photoelectric conversion element 101a and the second accumulation unit 109 are in an electrically non-connected state therebetween.

Next, at time t10, the driving signals FDG and TG go to high level, the accumulated charge of the photoelectric conversion element 101a is transferred to the first accumulation unit 102 and the second accumulation unit 109, at time t11 the driving signal TG goes to low level, and the photoelectric conversion element 101a, the first accumulation unit 102, and the second accumulation unit 109 are in an electrically non-connected state with each other.

Next, at time t12, the driving signal RST goes to high level, and the first accumulation unit 102 and the second accumulation unit 109 are reset and go to the power source potential VDD. Then at time t13, the driving signal RST goes to low level, and a time t14, the driving signal FDG goes to low level.

Also, between time t7 and t8, the analog residual charge signal of the second accumulation unit 109 is output to the read-out circuit 260 as Vr level. Further, between time t9 and t10, an analog residual charge signal of the second accumulation unit 109 to which the accumulated charge of the photoelectric conversion element 101a has been added is output to the read-out circuit 260 as Vs level. Accordingly, the read-out circuit 260 converts the difference between the potential corresponding to the Vs level and the potential corresponding to the Vr level into a digital residual charge signal Sa1, and outputs to the signal processing unit 280. That is to say, the digital residual charge signal Sa1 is a signal corresponding to the residual charge of the photoelectric conversion element 101a. The capacitance of the photoelectric conversion element 101a and the capacitances of the first accumulation unit 102 and the second accumulation unit 109 are known, and accordingly a value corresponding to the entire residual charge at the time of ending the accumulation period can be computed from the digital residual charge signal Sa1.

The computing unit 280b of the signal processing unit 280 then computes K1 × (number of times of resetting: 0 times) + K4 × (signal value of digital residual charge signal Sa1) as the image signal G(x, y) of the pixel circuit 250, and outputs to the memory 282. The memory 282 stores the image signal in the storage region that corresponds to the coordinates of each pixel circuit 250. The memory 282 then outputs the image signal G(x, y) corresponding to the coordinates of each pixel circuit 250 to the DSP circuit 120 as image data. K4 is a coefficient.

Also, between time t11 and t12, an analog residual charge signal corresponding to the entirety of residual charges, obtained by adding the residual charge of the photoelectric conversion element 101a to the residual charge of the first accumulation unit 102 and the second accumulation unit 109 is output to the read-out circuit 260 as the Vs level. Further, between time t13 and t14, an analog residual charge signal corresponding to accumulated charge of the first accumulation unit 102 and the second accumulation unit 109 following resetting is output to the read-out circuit 260 as the Vr level. Accordingly, the read-out circuit 260 converts the difference between the potential corresponding to the Vs level and the potential corresponding to the Vr level into a digital residual charge signal Sa2, and outputs to the signal processing unit 280. That is to say, the digital residual charge signal Sa2 is a signal corresponding to the entirety of residual charges. The computing unit 280b of the signal processing unit 280 is capable of computing K1 × (number of times of resetting: 0 times) + K5 × (signal value of digital residual charge signal Sa2) as the image signal G(x, y) of the pixel circuit 250. K5 is a coefficient. Note however, that the image signal G(x, y) computed by the level signals of the Vs level and the Vr level at the first time has a better SN ratio, as described earlier.

As described above, according to the present embodiment, the charge generated at the photoelectric conversion element 101a is accumulated in the first accumulation unit 102 and the second accumulation unit 109, the first signal is output each time the comparator 103a reaches the predetermined threshold value potential Vth, the first accumulation unit 102 and the second accumulation unit 109 are reset, and further the counter 105a increments the count value by 1. Accordingly, even in a case in which the charge generated at the photoelectric conversion element 101a exceeds the capacitance of the first accumulation unit 102 and the second accumulation unit 109, accumulation of the charge to the first accumulation unit 102 and the second accumulation unit 109 can be continued, and further, the amount of the charge generated at the photoelectric conversion element 101a can be calculated from the count value. Further, the residual charge of the photoelectric conversion element 101a and the second accumulation unit 109 is read out to the read-out circuit 260 by the amplifying unit 106 as an analog residual charge signal, and is converted into a digital value. In this case, the capacitance of the second accumulation unit 109 is smaller than the capacitance of the first accumulation unit 102, and accordingly deterioration of the SN ratio of the analog residual charge signal is suppressed. Conversely, the charge is accumulated in the first accumulation unit 102 and the second accumulation unit 109 during charge accumulation, thereby enabling the number of times of resetting to be reduced, and loss of charge when resetting can be suppressed.

Also, even in a case of low irradiation and the capacitance of the first accumulation unit 102 is not exceeded even once, the residual charge of the photoelectric conversion element 101a and the second accumulation unit 109 is read out to the read-out circuit 260 by the amplifying unit 106 as an analog residual charge signal, and is converted into a digital value. Accordingly, image signals including the residual charge can be generated even in a case of low irradiation in which the capacitance of the first accumulation unit 102 is not exceeded even once. In this case as well, the capacitance of the second accumulation unit 109 is smaller than the capacitance of the first accumulation unit 102, and accordingly deterioration in the SN ratio of the analog residual charge signal is suppressed.

### (Modification of Second Embodiment)

A solid-state image-capturing device 200 according to a Modification of the second embodiment differs from the solid-state image-capturing device 200 according to the second embodiment with respect to the point of adding reading of the Vr level and the Vs level at different timings. Points of difference as to the solid-state image-capturing device 200 according to the first embodiment will be described below.

Fig. 13 is a timing chart of a processing example according to the Modification of the second embodiment. Fig. A is a state example under high irradiation, and accordingly the counter 105a counts one time or more, and Fig. B is a state example under low irradiation and accordingly the counter 105a does not count. A point of reading the Vr1 level between time t6 and t7, and reading the Vs level between time t7 and t8, differs from the solid-state image-capturing device 200 according to the first embodiment.

The read-out potential at the Vr1 level at the first time corresponds to the residual charge of the first accumulation unit 102 and the second accumulation unit 109, due to the driving signal FDG being at high level. Accordingly, the potential corresponding to the residual charge of the first accumulation unit 102 and the second accumulation unit 109 can be read out.

The read-out potential at the Vr2 level at the first time corresponds to the residual charge of the second accumulation unit 109, due to the driving signal FDG being at low level. Accordingly, the potential corresponding to the residual charge of the second accumulation unit 109 can be read out.

The read-out potential at the Vs1 level at the first time corresponds to the residual charge of the photoelectric conversion element 101a and the second accumulation unit 109, due to being after the driving signal TG going to high level. Accordingly, the potential corresponding to the residual charge of the photoelectric conversion element 101a and the second accumulation unit 109 can be read out.

The read-out potential at the Vs2 level at the second time corresponds to the residual charge of the photoelectric conversion element 101a, the first accumulation unit 102, and the second accumulation unit 109, due to the driving signal FDG being at high level, and being after the driving signal TG going to high level again. Accordingly, the potential corresponding to the residual charge of the photoelectric conversion element 101a, the first accumulation unit 102, and the second accumulation unit 109 can be read out.

The read-out potential at the Vr3 level at the third time corresponds to the charge of the first accumulation unit 102 and the second accumulation unit 109 after resetting, due to the driving signal FDG being at high level, and being after the driving signal RST goes to high level. Accordingly, the potential corresponding to the charge of the first accumulation unit 102 and the second accumulation unit 109 after resetting can be read out.

Thus, upon entering the read period, the Vr1 level that is decided by the residual charge of the first accumulation unit 102 is sampled as an offset level. Next, with the capacitance connecting transistor 110 in a non-connected state (off), the offset level of the second accumulation unit 109 (in a state with capacitance reduced) is sampled as the Vr2 level. Subsequently, with the transfer transistor 107 in a connected state (on), the charge of the photoelectric conversion element 101a is transferred and is read out as the Vs1 level by CDS driving. Subsequently, with the capacitance connecting transistor 110 in a connected state (on), the level, in a state in which the capacitance is increased and the entire charge in the photoelectric conversion element 101a can be read out, is read out as the Vs2 level by CDS driving. Subsequently, with the reset transistor 104a in a connected state (on), the first accumulation unit 102 and the second accumulation unit 109 are read out as the Vr3 level that is reset level, by DDS driving.

It can be seen from these that by comparing the Vr1 level and the Vr2 level, comparing the Vr2 level and the Vs1 level, comparing the Vs1 level and the Vs2 level, and comparing the Vs2 level and the Vr3 level, digital signals corresponding to residual charges in each of the photoelectric conversion element 101a, the first accumulation unit 102, and the second accumulation unit 109 can be generated. Also, in the solid-state image-capturing device 200 according to the Modification of the second embodiment, signals corresponding to residual charge in all photoelectric conversion elements 101a can be read out by CDS driving, and in particular, image signals that have even lower noise and higher SN ratios can be obtained at low illuminance and midrange illuminance.

### (Third Embodiment)

A solid-state image-capturing device 200 according to a third embodiment differs from the solid-state image-capturing device 200 according to the first embodiment with respect to the point of further including a third accumulation unit. Points of difference as to the solid-state image-capturing device 200 according to the first embodiment will be described below.

### (Configuration Example of Pixel Circuit)

A configuration example of a pixel circuit 250 according to the present embodiment will be described with reference to Fig. 14 and Fig. 15. Fig. 14 is a block diagram illustrating a configuration example of the pixel circuit 250 according to the third embodiment. The pixel circuit 250 differs from the pixel circuit 250 according to the first embodiment by further including a third accumulation unit 111.

The third accumulation unit 111 is capable of being connected in parallel to the first accumulation unit 102 and the second accumulation unit 109.

Fig. 15 is a diagram illustrating a circuit configuration example of the pixel circuit 250 according to the third embodiment. The third accumulation unit 111 is connected to the node n10 via a second transfer transistor 112. The third accumulation unit 111 is a floating diffusion, for example. The second transfer transistor 112 is configured of an N-channel MOS transistor, for example. A driving signal TCG is supplied to the gate electrode. This driving signal TCG is a pulsed signal that is in an active state (on state) when at a high level state, and in an inactive state (off state) when at a low level state.

An OR gate 114 is connected to the gate electrode of the second transfer transistor 112, and a NOT gate 113 is connected to the OR gate 114. A signal xEXP is a signal that goes to 0 during the accumulation period, and goes to 1 during the read period. Accordingly, the driving signal TCG is at high level when the driving signal RST is a high level in the accumulation period, and is constantly at high level during the read period.

A second capacitance connecting transistor 115 is connected between the node n10 and the node n16. The second capacitance connecting transistor 115 is configured of an N-channel MOS transistor, for example. A driving signal FCG is supplied to the gate electrode. This driving signal FCG is a pulsed signal that is in an active state (on state) when at a high level state, and in an inactive state (off state) when at a low level state.

### (Operation Example)

Fig. 16 is a timing chart of an operation example according to the third embodiment. Fig. A is a state example under high irradiation and accordingly the counter 105a counts up one time or more, and Fig. B is a state example under low irradiation and accordingly the counter 105a does not count up.

The horizontal axis represents time, and the vertical axis represents the driving signals EXP, RST, TG, FCG, TCG, accumulated charge L10 and L18 of the photoelectric conversion element 101a, potential L16 and L20 of the first accumulation unit 102, potential L22 and L24 of the second accumulation unit 109, and potential L26 and L28 of the third accumulation unit 111. Line L10 indicates the accumulated charge of the photoelectric conversion element 101a, and line L12 indicates the generated charge amount of the photoelectric conversion element 101a. The driving signal EXP represents charge accumulation period when at high level, and represents read period when at low level. The channel potentials of the transistors when in an inactive state (in off state) are in the order of transistor 112 < transistor 115 < transistor 104a.

As shown in Fig. A, in a high irradiation state, the driving signals RST, TG, FCG, and TCG go to high level at time t0, and the photoelectric conversion element 101a, the first accumulation unit 102, the second accumulation unit 109, and the third accumulation unit 111 are initialized. That is to say, the potential of the node n10 is power source potential VDD.

Next, at time t1, the driving signals RST, TG, FCG, and TCG go to low level, and the driving signal EXP goes to high level. Accordingly, a charge is generated at the photoelectric conversion element 101a, charge that exceeds the capacitance of the photoelectric conversion element 101a is accumulated at the second accumulation unit 109, and the potential L22 at the node n10 of the second accumulation unit 109 begins to drop. Then at time t2, charge is accumulated to the upper limit of the capacitance of the second accumulation unit 109. Accordingly, charge that has exceeded the capacitance of the second accumulation unit 109 is accumulated in the first accumulation unit 102, and the potential L16 of the first accumulation unit 102 begins to drop.

Then at time t3, threshold value potential Vth of the comparator 103a is reached for the first time. Accordingly, the comparator 103a outputs the first signal, and the counter 105a increments the count value by 1. At the same time, the first signal that is the driving signal RST is at the high level, and accordingly, the reset transistor 104a goes to a conducting state, and the potential of the node n10 of the first accumulation unit 102 is reset to the power source potential VDD.

Also, the driving signal TCG goes to high level synchronously with the driving signal RST, and the second transfer transistor 112 is in an electrically conducting state. Accordingly, charge generated at the photoelectric conversion element 101a during the reset period of the first accumulation unit 102 is accumulated at the third accumulation unit 111, and the potential L26 drops from the initial potential VDD.

Next, at time t4, the driving signal RST goes to low level and also the driving signal TCG goes to low level at the same time, and the charge generated at the photoelectric conversion element 101a is accumulated in the first accumulation unit 102 again. Such processing is repeated, and at time t7 the driving signal EXP goes to low level and the read period is started, and the driving signals TCG and FCG go to high level and the second transfer transistor 112 and the second capacitance connecting transistor 115 are in a conducting state.

Subsequently, at time t8, the driving signal TG goes to high level, the accumulated charge of the photoelectric conversion element 101a is transferred to the first accumulation unit 102, the second accumulation unit 109, and the third accumulation unit 111, and the potential of the node n10 corresponds to the potential of the remaining charge of the photoelectric conversion element 101a, the first accumulation unit 102, the second accumulation unit 109, and the third accumulation unit 111. Then at time t9, the driving signal TG goes to low level, and the photoelectric conversion element 101a, the first accumulation unit 102, the second accumulation unit 109, and the third accumulation unit 111 are in an electrically non-connected state with each other.

Next, at time t10, the driving signal RST goes to high level, and the first accumulation unit 102, the second accumulation unit 109, and the third accumulation unit 111 are reset to the initial potential VDD. Subsequently, at time t10, the driving signal RST goes to low level, and the driving signals FCG and TCG go to low level.

Also, between time t7 and t8, an analog residual charge signal of the second accumulation unit 109 is output to the read-out circuit 260 as Vr level. Further, between time t9 and t10, an analog residual charge signal of the second accumulation unit 109 to which the accumulated charge of the photoelectric conversion element 101a has been added is output to the read-out circuit 260 as Vs level.

Accordingly, the read-out circuit 260 converts the difference between the potential corresponding to the Vs level and the potential corresponding to the Vr level into a digital residual charge signal Sa3, and outputs to the signal processing unit 280. That is to say, the digital residual charge signal Sa3 is a signal corresponding to the residual charge of the photoelectric conversion element 101a. The capacitance of the photoelectric conversion element 101a and the capacitances of the first accumulation unit 102, the second accumulation unit 109, and the third accumulation unit 111 are known, and accordingly a value corresponding to the entire residual charge at the time of ending the accumulation period can be computed from the digital residual charge signal Sa3.

The computing unit 280b of the signal processing unit 280 then computes K1 × (number of times of resetting: 2 times) + K6 × (signal value of digital residual charge signal Sa3) as the image signal G(x, y) of the pixel circuit 250, and outputs to the memory 282. The memory 282 stores the image signal in the storage region that corresponds to the coordinates of each pixel circuit 250. The memory 282 then outputs the image signal G(x, y) corresponding to the coordinates of each pixel circuit 250 to the DSP circuit 120 as image data. K6 is a coefficient.

Also, between time t9 and t10, an analog residual charge signal of the second accumulation unit 109 to which the accumulated charge of the photoelectric conversion element 101a is added, is output to the read-out circuit 260 as the Vs level. Further, between time t11 and t12, an analog residual charge signal corresponding to accumulated charge of the first accumulation unit 102, the second accumulation unit 109, and the third accumulation unit 111 following resetting is output to the read-out circuit 260 as the Vr level. Accordingly, the read-out circuit 260 converts the difference between the level corresponding to the Vs level and the level corresponding to the Vr level into a digital residual charge signal Sa4, and outputs to the signal processing unit 280. That is to say, the digital residual charge signal Sa4 is a signal corresponding to the entirety of residual charges. The computing unit 280b of the signal processing unit 280 is capable of computing K1 × (number of times of resetting: 2 times) + K7 × (signal value of digital residual charge signal Sa4) as the image signal G(x, y) of the pixel circuit 250. K7 is a coefficient. Note however, that the image signal G(x, y) computed by the level signals of the Vs level and the Vr level at the first time has a better SN ratio, as described earlier.

Conversely, as shown in Fig. B, in a low irradiation state, the driving signals RST, TG, FCG, and TCG go to high level at time t0, and the photoelectric conversion element 101a, the first accumulation unit 102, the second accumulation unit 109, and the third accumulation unit 111 are initialized. That is to say, the potential of the node n10 is the power source potential VDD.

Subsequently, at time t1, the driving signals RST, TG, FCG, and TCG go to low level, and the driving signal EXP goes to high level. Accordingly, a charge is generated at the photoelectric conversion element 101a, and is accumulated in the capacitance of the photoelectric conversion element 101a. The charge amount L18 continues increasing, but the charge amount generated in the capacitance within the photoelectric conversion element 101a is maintained. Accordingly, the potentials L20, L24, and L28 of the first accumulation unit 102, the second accumulation unit 109, and the third accumulation unit 111 are each maintained at the initial potential VDD.

Next, at time t7, the driving signal EXP goes to low level and the read period is started, and the driving signals TCG and FCG go to high level, and the second transfer transistor 112 and the second capacitance connecting transistor 115 are in a conducting state. Further subsequently, at time t8, the driving signal TG goes to high level, the accumulated charge of the photoelectric conversion element 101a is transferred to the first accumulation unit 102, the second accumulation unit 109, and the third accumulation unit 111, and the potential of the node n10 corresponds to the potential of the remaining charge of the photoelectric conversion element 101a, the first accumulation unit 102, the second accumulation unit 109, and the third accumulation unit 111. Then at time t9, the driving signal TG goes to low level, and the photoelectric conversion element 101a, the first accumulation unit 102, the second accumulation unit 109, and the third accumulation unit 111 are in an electrically non-connected state with each other.

Next, at time t10, the driving signal RST goes to high level, and the first accumulation unit 102, the second accumulation unit 109, and the third accumulation unit 111 are reset to the initial potential VDD. Then at time t10, the driving signal RST goes to low level, and the driving signals FCG and TCG go to low level.

Also, between time t7 and t8, the analog residual charge signal of the second accumulation unit 109 is output to the read-out circuit 260 as Vr level. Further, between time t9 and t10, an analog residual charge signal of the second accumulation unit 109 to which the accumulated charge of the photoelectric conversion element 101a has been added is output to the read-out circuit 260 as Vs level. Accordingly, the read-out circuit 260 converts the difference between the potential corresponding to the Vs level and the potential corresponding to the Vr level into the digital residual charge signal Sa3, and outputs to the signal processing unit 280. That is to say, the digital residual charge signal Sa3 is a signal corresponding to the residual charge of the photoelectric conversion element 101a. The capacitance of the photoelectric conversion element 101a and the capacitances of the first accumulation unit 102, the second accumulation unit 109, and the third accumulation unit 111 are known, and accordingly a value corresponding to the entire residual charge at the time of ending the accumulation period can be computed from the digital residual charge signal Sa3.

The computing unit 280b of the signal processing unit 280 then computes K1 × (number of times of resetting: 0 times) + K6 × (signal value of digital residual charge signal Sa3) as the image signal G(x, y) of the pixel circuit 250, and outputs to the memory 282. The memory 282 stores the image signal in the storage region that corresponds to the coordinates of each pixel circuit 250. The memory 282 then outputs the image signal G(x, y) corresponding to the coordinates of each pixel circuit 250 to the DSP circuit 120 as image data. K6 is a coefficient.

Also, between time t9 and t10, the analog residual charge signal of the second accumulation unit 109 to which the residual charge of the photoelectric conversion element 101a has been added is output to the read-out circuit 260 as the Vs level. Further, between time t11 and t12, an analog residual charge signal corresponding to accumulated charge of the first accumulation unit 102, the second accumulation unit 109, and the third accumulation unit 111 following resetting is output to the read-out circuit 260 as the Vr level. Accordingly, the read-out circuit 260 converts the difference between the Vs level and the Vr level into a digital residual charge signal Sa4, and outputs to the signal processing unit 280. That is to say, the digital residual charge signal Sa4 is a signal corresponding to the entirety of residual charges. The computing unit 280b of the signal processing unit 280 is capable of computing K1 × (number of times of resetting: 0 times) + K7 × (signal value of digital residual charge signal Sa4) as the image signal G(x, y) of the pixel circuit 250. K7 is a coefficient. Note however, that the image signal G(x, y) computed by the level signals of the Vs level and the Vr level at the first time has a better SN ratio, as described earlier.

As described above, according to the present embodiment, the charge generated at the photoelectric conversion element 101a is accumulated in the first accumulation unit 102 and the second accumulation unit 109, the first signal is output each time the comparator 103a reaches the predetermined threshold value potential Vth, the first accumulation unit 102 is reset, and further the counter 105a increments the count value by 1. Accordingly, even in a case in which the charge generated at the photoelectric conversion element 101a exceeds the capacitance of the first accumulation unit 102, accumulation of the charge to the first accumulation unit 102 can be continued, and the amount of the charge generated at the photoelectric conversion element 101a can also be calculated from the count value. Further, the charge of the first accumulation unit 102 at the time of resetting can be accumulated at the third accumulation unit 111.

Thus, the residual charge at the photoelectric conversion element 101a, the first accumulation unit 102, the second accumulation unit 109, and the third accumulation unit 111 is read out to the read-out circuit 260 by the amplifying unit 106 as an analog residual charge signal, and is converted into a digital value. This residual charge also includes the charge generated at the photoelectric conversion element 101a during the reset period of the first accumulation unit 102, and accordingly the entire charge generated at the photoelectric conversion element 101a can be generated as an image signal G(x, y). Thus, image signals including the residual charge when resetting can be generated without saturation of the dynamic range, even under high irradiation.

Also, even in a case of low irradiation and the capacitance of the first accumulation unit 102 is not exceeded even once, the residual charge of the photoelectric conversion element 101a and the second accumulation unit 109 is read out to the read-out circuit 260 by the amplifying unit 106 as an analog residual charge signal, and is converted into a digital value. Accordingly, image signals including the residual charge can be generated even in a case of low irradiation in which the capacitance of the first accumulation unit 102 is not exceeded even once.

### (Modification 1 of Third Embodiment)

A solid-state image-capturing device 200 according to Modification 1 of the third embodiment differs from the solid-state image-capturing device 200 according to the third embodiment with respect to the point of further including the capacitance connecting transistor 110. Points of difference as to the solid-state image-capturing device 200 according to the third embodiment will be described below.

### (Configuration Example of Pixel Circuit)

Fig. 17 is a diagram illustrating a circuit configuration example of a pixel circuit 250 according to Modification 1 of the third embodiment. The capacitance connecting transistor 110 is connected between the node n10 and a node n20.

### (Operation Example)

Fig. 18 is a timing chart of an operation example according to Modification 1 of the third embodiment. Fig. A is a state example under high irradiation and accordingly the counter 105a counts up one time or more, and Fig. B is a state example under low irradiation and accordingly the counter 105a does not count up.

The horizontal axis represents time, and the vertical axis represents the driving signals EXP, RST, TG, FDG, FCG, TCG, accumulated charge L10 and L18 of the photoelectric conversion element 101a, potential L16 and L20 of the first accumulation unit 102, potential L22 and L24 of the second accumulation unit 109, and potential L26 and L28 of the third accumulation unit 111. Line L10 indicates the accumulated charge of the photoelectric conversion element 101a, and line L12 indicates the generated charge amount of the photoelectric conversion element 101a. The driving signal EXP represents charge accumulation period when at high level, and represents read period when at low level. The channel potentials of the transistors when in inactive state (in off state) are in the order of transistor 112 < transistor 115 < transistor 104a.

As shown in Fig. A, in a high irradiation state, the driving signals RST, TG, FDG, FCG, and TCG go to high level at time t0, and the photoelectric conversion element 101a, the first accumulation unit 102, the second accumulation unit 109, and the third accumulation unit 111 are initialized. That is to say, the potential of the node n10 is power source potential VDD.

Next, at time t1, the driving signals RST, TG, FCG, and TCG go to low level, and the driving signal EXP goes to high level. Accordingly, a charge is generated at the photoelectric conversion element 101a, and the charge exceeding the capacitance of the photoelectric conversion element 101a is accumulated at the second accumulation unit 109, and the potential L22 at the node n10 of the second accumulation unit 109 begins to drop. Then at time t2, charge is accumulated to the upper limit of the capacitance of the second accumulation unit 109. Accordingly, charge that has exceeded the capacitance of the second accumulation unit 109 is accumulated in the first accumulation unit 102, and the potential L16 of the first accumulation unit 102 begins to drop.

Then at time t3, threshold value potential Vth of the comparator 103a is reached for the first time. Accordingly, the comparator 103a outputs the first signal, and the counter 105a increments the count value by 1. At the same time, the first signal that is the driving signal RST is at the high level, and accordingly, the reset transistor 104a goes to a conducting state, and the potential of the node n10 of the first accumulation unit 102 is reset to the power source potential VDD.

Also, the driving signal TCG goes to high level synchronously with the driving signal RST, and the second transfer transistor 112 is in an electrically conducting state. Accordingly, charge generated at the photoelectric conversion element 101a during the reset period of the first accumulation unit 102 is accumulated at the third accumulation unit 111, and the potential L26 drops from the initial potential VDD.

Then, at time t4, the driving signal RST goes to low level and also the driving signal TCG goes to low level at the same time, and the charge generated at the photoelectric conversion element 101a is accumulated in the first accumulation unit 102 again. Such processing is repeated, and at time t7 the driving signal EXP goes to low level and the read period is started, and the driving signals TCG and FCG go to high level and the second transfer transistor 112 and the second capacitance connecting transistor 115 are in a conducting state.

Subsequently, at time t8, the driving signal FDG goes to low level, and the second accumulation unit 109, the first accumulation unit 102, and the third accumulation unit 111 are in an electrically non-connected state. Subsequently, at time t9, the driving signal TG goes to high level, the accumulated charge of the photoelectric conversion element 101a is transferred to the second accumulation unit 109, and the potential of the node n10 corresponds to the potential of the remaining charge of the photoelectric conversion element 101a and the second accumulation unit 109. Then at time t10, the driving signal TG goes to low level, and the photoelectric conversion element 101a and the second accumulation unit 109 are in an electrically non-connected state therebetween.

Subsequently, at time t11, the driving signals TG and FDG go to high level, the photoelectric conversion element 101a, the first accumulation unit 102, the second accumulation unit 109, and the third accumulation unit 111 are in an electrically non-connected state, and the potential of the node n10 corresponds to the potential of the remaining charge of the photoelectric conversion element 101a, the first accumulation unit 102, the second accumulation unit 109, and the third accumulation unit 111.

Subsequently, at time t12, the driving signal TG goes to low level, at time t13 the driving signal RST goes to high level, and the first accumulation unit 102, the second accumulation unit 109, and the third accumulation unit 111 are reset to the initial potential VDD. Subsequently, at time t14, the driving signal RST goes to low level, and the driving signals FDG, FCG, and TCG go to low level.

Also, between time t7 and t8, the analog residual charge signal of the second accumulation unit 109 is output to the read-out circuit 260 as the Vr1 level. An analog residual charge signal corresponding to the accumulated charge of the first accumulation unit 102, the second accumulation unit 109, and the third accumulation unit 111 is output to the read-out circuit 260.

Between time t8 and t9, an analog residual charge signal corresponding to the accumulated charge of the second accumulation unit 109 is output to the read-out circuit 260 as the Vr2 level. Further, between time t10 and t11, an analog residual charge signal corresponding to the accumulated charge of the second accumulation unit 109 is output to the read-out circuit 260 as the Vs1 level. Further, an analog residual charge signal corresponding to an accumulated charge in which the accumulated charge of the photoelectric conversion element 101a is added to the accumulated charge of the second accumulation unit 109 is output to the read-out circuit 260.

Also, between time t12 and t13, an analog residual charge signal corresponding to an accumulated charge in which the accumulated charge of the photoelectric conversion element 101a is added to the accumulated charge of the first accumulation unit 102, the second accumulation unit 109, and the third accumulation unit 111 is output twice to the read-out circuit 260 as Vs2 level. Then, between time t14 and t15, an analog residual charge signal corresponding to the reset charge of the first accumulation unit 102, the second accumulation unit 109, and the third accumulation unit 111 is output to the read-out circuit 260 as Vr3 level.

As can be understood from the above, digital signals corresponding to the residual charges of each of the photoelectric conversion element 101a, the first accumulation unit 102, the second accumulation unit 109, and the third accumulation unit 111, can be generated by comparing each of the signal levels.

Conversely, as shown in Fig. B, in a low irradiation state, the driving signals RST, TG, FDG, FCG, and TCG go to high level at time t0, and the photoelectric conversion element 101a, the first accumulation unit 102, the second accumulation unit 109, and the third accumulation unit 111 are initialized. That is to say, the potential of the node n10 is the power source potential VDD.

Subsequently, at time t1, the driving signals RST, TG, FCG, and TCG go to low level, and the driving signal EXP goes to high level. Accordingly, a charge is generated at the photoelectric conversion element 101a, and is accumulated in the capacitance of the photoelectric conversion element 101a. The charge amount L18 continues increasing, but the charge amount generated in the capacitance within the photoelectric conversion element 101a is maintained. Accordingly, the potentials L20, L24, and L28 of the first accumulation unit 102, the second accumulation unit 109, and the third accumulation unit 111 are each maintained at the initial potential VDD.

Reading is processed in the same way as with the high irradiation level.

As described above, according to the present Modification 1, in addition to processing effects the same as those of the third embodiment, digital signals corresponding to the residual charges of each of the photoelectric conversion element 101a, the first accumulation unit 102, the second accumulation unit 109, and the third accumulation unit 111, can be generated by comparing each of the signal levels.

### (Modification 2 of Third Embodiment)

A solid-state image-capturing device 200 according to Modification 2 of the third embodiment differs from the solid-state image-capturing device 200 according to Modification 1 of the third embodiment with respect to the point of connecting the third accumulation unit 111 to the photoelectric conversion element 101a without going through the capacitance connecting transistor 110. Points of difference as to the solid-state image-capturing device 200 according to Modification 1 of the third embodiment will be described below.

### (Configuration Example of Pixel Circuit)

Fig. 19 is a diagram illustrating a circuit configuration example of a pixel circuit 250 according to Modification 2 of the third embodiment. This differs from the solid-state image-capturing device 200 according to Modification 1 of the third embodiment with respect to the point that one end of the second transfer transistor 112 is connected to the photoelectric conversion element 101a. Also, according to this connection, the second capacitance connecting transistor 115 is connected between one end of the third accumulation unit 111 and the node n16. Thus, charges are transferred through one transistor and not through two transistors, and accordingly, effects of further improved transfer efficiency can be obtained in addition to the effects of Modification 1 of the third embodiment.

### (Fourth Embodiment)

A solid-state image-capturing device 200 according to a fourth embodiment differs from the solid-state image-capturing devices 200 according to the first embodiment through the third embodiment with respect to the point that a pixel circuit 250 is configured of two substrates. Points of difference as to the solid-state image-capturing device 200 according to the first embodiment will be described below.

Fig. 20 is a diagram illustrating a configuration example of the pixel circuit 250 according to Modification 3 of the first embodiment. A configuration is made that is divided into a first substrate and a second substrate along a line L190. The SN ratio at the time of signal conversion is known to improve as the capacitance of the first accumulation unit 102 becomes low capacitance. Also, connection is made such that a diffusion layer connecting to an amplifying transistor (AMP) within the comparator 103a is on the first substrate. In the same way, connection is made such that a polysilicon (POLY) gate of a MOS transistor within the comparator 103a connecting to the amplifying transistor (AMP) is also on the first substrate. The comparator 103a has a current mirror including two transistors (PTR1, PTR2). The current mirror is disposed on the second substrate.

Fig. 21 is a diagram illustrating a configuration example of a first substrate and a second substrate. A first substrate 200a and a second substrate 200b are connected by Cu-Cu interconnects, for example. Connection may be made by connecting portions such as vias, bumps, and so forth. Fig. 22 is a diagram illustrating a configuration example in which the pixel circuit 250 illustrated in Fig. 11 is configured of two substrates. A configuration is made that is divided into the first substrate 200a and the second substrate 200b along line L192. Fig. 23 is a diagram illustrating a configuration example in which the pixel circuit 250 illustrated in Fig. 15 is configured of two substrates. A configuration is made that is divided into the first substrate 200a and the second substrate 200b along line L194. Fig. 24 is a diagram illustrating a configuration example of the pixel circuit 250 illustrated in Fig. 19. A configuration is made that is divided into the first substrate 200a and the second substrate 200b along line L196. The size of the solid-state image-capturing device 200 can be further reduced by such configurations.

### (Fifth Embodiment)

A solid-state image-capturing device 200 according to a fifth embodiment differs from the solid-state image-capturing devices 200 according to the first embodiment through the third embodiment with respect to the point that a pixel circuit 250 is configured of two substrates or three substrates. Points of difference as to the solid-state image-capturing device 200 according to the first embodiment will be described below.

Fig. 25 is a diagram illustrating a configuration example of the first substrate 200a, the second substrate 200b, and a third substrate 200c. The first substrate 200a, the second substrate 200b, and the third substrate 200c are interconnected by Cu-Cu interconnects.

Fig. 26 is a diagram illustrating a configuration example in which the pixel circuit 250 illustrated in Fig. 4 is configured of two substrates. A configuration is made that is divided into the first substrate (see Fig. 25) and the second substrate (see Fig. 25) along line L200. Fig. 27 is a diagram illustrating a configuration example in which the pixel circuit 250 illustrated in Fig. 10 is configured of three substrates. A configuration is made that is divided into the first substrate (see Fig. 25), the second substrate (see Fig. 25), and the third substrate (see Fig. 25) along lines L202 and 204. Fig. 28 is a diagram illustrating a configuration example in which the pixel circuit 250 illustrated in Fig. 14 is configured of two substrates. A configuration is made that is divided into the first substrate (see Fig. 25) and the second substrate (see Fig. 25) along lines L206 and 208. Fig. 29 is a diagram illustrating a configuration example in which the pixel circuit 250 illustrated in Fig. 14 is configured of three substrates. A configuration is made that is divided into the first substrate (see Fig. 25), the second substrate (see Fig. 25), and the third substrate (see Fig. 25) along lines L210 and 220. The size of the solid-state image-capturing device 200 can be further reduced by such configurations.

### (Sixth Embodiment)

A solid-state image-capturing device 200 according to a sixth embodiment differs from the solid-state image-capturing device 200 according to the first embodiment with respect to the point that the comparator 300, the counter 261, and the latch, within a column signal processing unit 160, are configured for each pixel circuit 250. Points of difference as to the solid-state image-capturing device 200 according to the first embodiment will be described below.

Fig. 30 is a diagram schematically illustrating part of the image-capturing device 200. As illustrated in Fig. 30, the comparator 300, the counter 261, and the latch, are configured within the column signal processing unit 160 for each pixel circuit 250. Also, the comparator 300 may be shared as the comparator 103a (see Fig. 5). This enables the circuit scale to be reduced and reduction in area to be realized.

### (Seventh Embodiment)

A solid-state image-capturing device 200 according to a seventh embodiment differs from the solid-state image-capturing device 200 according to the first embodiment with respect to the point of having a normal shooting mode and a calibration mode. Points of difference as to the solid-state image-capturing device 200 according to the first embodiment will be described below.

The normal shooting mode (see Fig 7) has the accumulation period and the read period, and is a mode in which normal shooting is performed. Conversely, the calibration mode is a mode for acquiring information for performing calibration of variance in properties of each pixel circuit before the normal shooting.

There is variance in reversal threshold value from one pixel to another due to transistor manufacturing variance in the determining unit 103, and accordingly the calibration mode is used in the present embodiment to find the threshold value thereof. Each of the modes is set in accordance with input of instructions via the operating unit (140). In each of the modes, driving signals supplied to each pixel circuit 250 via the vertical scanning circuit 210 are changed in accordance with the mode.

### (Operation Example of Calibration Mode)

Fig. 31 is a timing chart of an operation example in the calibration mode according to the present embodiment. The horizontal axis represents time, and the vertical axis represents the driving signals EXP and RST, potential L18 of a variable voltage power source VRS and potential L20 of the first accumulation unit 102. Note that in the solid-state image-capturing device 200 according to the seventh embodiment, the variable voltage power source VRS is connected to the drain of the reset transistor 104a (see Fig. 5). The variable voltage power source VRS supplies fixed potential VDD to the drain of the reset transistor 104a (see Fig. 5) in the normal shooting mode (see Fig. 7), and supplies the potential L18 that varies in time series, to the drain of the reset transistor 104a (see Fig. 5) in the calibration mode. Note that the potential of the variable voltage power source VRS according to the present embodiment corresponds to the reset potential.

As described above, the comparator 103a outputs the first signal at low level until the potential of node n10 (see Fig. 5) crosses the threshold value potential Vth to the lower side, and upon crossing the threshold value potential Vth to the lower side, outputs the first signal at high level. Also, in a case in which the first signal is at high level, the reset transistor 104a outputs high level signals. Note that the potential of the node n10 (see Fig. 5) corresponds to the first accumulation unit 102.

As shown in Fig. 31, at time t0 the potential L18 of the variable voltage power source VRS begins to increase. The potential of the node n10 is in a state crossing the threshold value potential Vth to the lower side when starting, and accordingly the first signal is high level, and the driving signal RST is high level. Due to the driving signal RST being at high level, the reset transistor 104a maintains the conducting state.

As the increase in the potential L18 of the variable voltage power source VRS further continues, the potential of the node n10 is in a state of crossing the threshold value potential Vth to the upper side at time t1. Accordingly, the first signal changes to low level, and the driving signal RST goes to low level. Thus, the reset transistor 104a goes to a non-conducting state. Thereafter, the increase in the potential L18 of the variable voltage power source VRS continues, but the reset transistor 104a is in a non-conducting state, and accordingly the potential of the node n10 is maintained in the state of threshold value potential Vth.

Then at time t2, the read period arrives. In the read period, the potential L18 of the variable voltage power source VRS is maintained at the power source potential VDD. Then at time t3, the driving signal RST becomes a high level signal due to the initialization signal SHT output from the counter reset circuit 108 (see Fig. 5), and the potential of the node n10 (see Fig. 5) is initialized to the power source potential VDD.

At this time, between time t2 and t3, the potential of the node n10 that corresponds to the threshold value potential Vth is read out to the read circuit 260 as Vs level. Conversely, between time t4 and t5, the potential of the node n10 that corresponds to the power source potential VDD is read out to the read circuit 260 as Vr level. Accordingly, the difference between Vs level potential and Vr level potential is generated as the threshold value potential Vth of this pixel circuit 250. The memory 282 stores the threshold value potential Vth for the coordinates (x, y) of each pixel circuit 250. The capacitance of the first accumulation unit 102 is known, and thus the residual charge amount corresponding to one count of the counter 105a can be accurately calculated from information of the threshold value potential Vth and of the capacitance of the first accumulation unit 102. Accordingly, the coefficient K1 is calibrated, and stored as K1(x, y) for the coordinates (x, y) of each pixel circuit 250. That is to say, the image signal G(x, y) of the pixel circuit 250 can be computed more accurately as K1(x, y) × (number of times of resetting) + K2 × (value of digital signal Sa).

As described above, according to the present embodiment, the potential L18 of the variable voltage power source VRS is increased from the lower side of the threshold value potential Vth in the calibration mode. Accordingly, by continuing increase of the potential L18 of the variable voltage power source VRS, the potential of the node n10 reaches a state of crossing the threshold value potential Vth to the upper side, the reset transistor 104a goes to a non-conducting state, and the potential of the node n10 is maintained in the state of the threshold value potential Vth. Accordingly, information of the threshold value potential Vth can be obtained for each pixel circuit 250, the coefficient K1 can be calibrated and stored as K1(X, y) for coordinates (x, y) of each pixel circuit 250. Thus, the image signal G(x, y) of the pixel circuit 250 can be computed more accurately as K1(x, y) × (number of times of resetting) + K2 × (value of digital signal Sa).

### (Eighth Embodiment)

A solid-state image-capturing device 200 according to an eighth embodiment differs from the solid-state image-capturing device 200 according to the seventh embodiment with respect to the point of executing the calibration mode while changing the slope of potential change of the variable voltage power source VRS a plurality of times. Points of difference as to the solid-state image-capturing device 200 according to the first embodiment will be described below.

### (Operation Example of Calibration Mode)

Fig. 32 is a timing chart of an operation example of the calibration mode according to the present embodiment. The horizontal axis represents time, and the vertical axis represents the driving signals EXP and RST, potentials L22 and L24 of the variable voltage power source VRS, and potentials L26 and L28 of the first accumulation unit 102. The potential L22 and the potential L26 exhibit a state of greater slope in potential change than the potential L24 and the potential L28.

There are cases in which the determination threshold value changes when the slope of potential change of the first accumulation unit 102 changes, due to properties such as operation delay of the comparator 103a and so forth. In preparation for such, calibration data is acquired a plurality of times while changing the sweep slope of the variable voltage power source VRS in a calibration data acquisition mode.

In a case in which the count value of the counter 105a is small, the illuminance is low, and the slope of potential change at the first accumulation unit should be small, so a value with smaller inclination can be used as the calibration data as well. Conversely, in a case in which the count value is great, the illuminance is high, so a value with greater inclination can be used as the calibration data. Accordingly, fluctuation in determination threshold value due to change in the slope of potential of the first accumulation unit 102 can be followed.

### <<4. Application Example>>

The technology according to the present disclosure can be applied to various products. For example, the technology according to the present disclosure can be realized as a device installed in any type of moving body such as automobiles, electric vehicles, hybrid electric vehicles, motorcycles, bicycles, personal mobility devices, aircraft, drones, ships, robots, construction machinery, agricultural machinery (tractors), and so forth.

Fig. 33 is a block diagram illustrating a schematic configuration example of a vehicle control system 7000 that is an example of a moving body control system to which the technology according to the present disclosure can be applied. The vehicle control system 7000 includes a plurality of electronic control units connected via a communication network 7010. In the example illustrated in Fig. 33, the vehicle control system 7000 includes a drive system control unit 7100, a body system control unit 7200, a battery control unit 7300, an external information detection unit 7400, an internal information detection unit 7500, and an integrated control unit 7600. The communication network 7010 that connects these plurality of control units may be, for example, an in-vehicle communication network that conforms to an optional standard such as CAN (Controller Area Network), LIN (Local Interconnect Network), LAN (Local Area Network), FlexRay (registered trademark), or the like.

Each of the control units includes a microcomputer that performs computation processing following various types of programs, a storage unit that stores programs executed by the microcomputer and parameters and so forth that are used for various types of computation, and a drive circuit that drives various types of devices that are the object of control. The control units each include a network I/F for performing communication with other control units via the communication network 7010, and a communication I/F for performing communication with internal and external devices, sensors, and so forth, by wired communication and wireless communication. In Fig. 33, a microcomputer 7610, a general-purpose communication I/F 7620, a dedicated communication I/F 7630, a positioning unit 7640, a beacon reception unit 7650, an onboard equipment I/F 7660, an audio-and-image output unit 7670, an in-vehicle network I/F 7680, and a storage unit 7690 are illustrated as functional components of the integrated control unit 7600. The other control units also include the microcomputer, the communication I/Fs, the storage unit, and so forth, in the same way.

The drive system control unit 7100 controls operations of devices related to the drive system of the vehicle, following various types of programs. For example, the drive system control unit 7100 functions as a control device for a drive force generating device that generates drive force in the vehicle, such as an internal combustion engine, a traction motor, or the like, a drive force transmission mechanism for transmitting the drive force to wheels, a steering mechanism that adjusts the steering angle of the vehicle, a braking device that generates braking force for the vehicle, and so forth. The drive system control unit 7100 may also have functions as a control device for ABS (Antilock Brake System), ESC (Electronic Stability Control), or the like.

A vehicle state detection unit 7110 is connected to the drive system control unit 7100. Examples of the vehicle state detection unit 7110 include at least one of a gyro sensor that detects angular velocity of axial rotation motion of the vehicle body, an acceleration sensor that detects acceleration of the vehicle, and sensors for detecting operation amount of an accelerator pedal, operation amount of a brake pedal, steering angle of a steering wheel, engine revolutions, wheel rotational speed, and so forth. The drive system control unit 7100 performs computation processing using signals input from the vehicle state detection unit 7110, and controls an internal combustion engine, a traction motor, an electric power steering device, a brake device, and so forth.

The body system control unit 7200 controls operations of various types of devices installed in the vehicle body, following various types of programs. For example, the body system control unit 7200 functions as a control device for a keyless entry system, a smart key system, a power window device, and various types of lamps such as headlamps, taillamps, brake lamps, turn indicator lamps, foglamps, and so forth. In this case, the body system control unit 7200 is capable of receiving input of radio waves emitted from a portable device substituting for a key, and signals from various types of switches. The body system control unit 7200 accepts input of such radio waves and signals, and controls door lock devices, power window devices, lamps, and so forth, of the vehicle.

The battery control unit 7300 controls a secondary battery 7310 that is an electric power supply source for the traction motor, following various types of programs. For example, information such as battery temperature, battery output potential, battery state of charge, and so forth, is input to the battery control unit 7300 from a battery device including the secondary battery 7310. The battery control unit 7300 uses these signals to perform computation processing, and performs control such as temperature adjustment control of the secondary battery 7310, control of a cooling device included in the battery device, and so forth.

The external information detection unit 7400 detects external information of outside of the vehicle in which the vehicle control system 7000 is installed. For example, at least one of an image-capturing unit 7410 and an external information detection portion 7420 is connected to the external information detection unit 7400. The image-capturing unit 7410 includes at least one of a ToF (Time of Flight) camera, a stereo camera, a monocular camera, an infrared camera, and other cameras. The external information detection portion 7420 includes at least one of, for example, an environment sensor for detecting the current weather or atmospheric conditions, and a surroundings information detection sensor for detecting other vehicles, obstructions, pedestrians, and so forth, in the surroundings of the vehicle in which the vehicle control system 7000 is installed.

The environment sensor may be at least one of, for example, a raindrop sensor for detecting rainy weather, a fog sensor for detecting fog, a sunlight sensor for detecting the degree of sunlight, and a snow sensor for detecting snowfall. The surroundings information detection sensor may be at least one of an ultrasound sensor, a radar device, and a LIDAR (Light Detection and Ranging, Laser Imaging Detection and Ranging) device. The image-capturing unit 7410 and the external information detection portion 7420 may each be provided as independent sensors or devices, or may be provided as a device in which a plurality of sensors or devices are integrated.

Now, Fig. 34 illustrates an example of installation positions of the image-capturing unit 7410 and the external information detection portion 7420. Image-capturing units 7910, 7912, 7914, 7916, and 7918 are provided to, for example, at least one position of a front nose, side mirrors, a rear bumper, a rear hatch, and the top of a windshield on the inside of a vehicle cabin, of a vehicle 7900. The image-capturing unit 7910 provided to the front nose and the image-capturing unit 7918 provided to the top of the windshield on the inside of the vehicle cabin primarily acquire images forward of the vehicle 7900. The image-capturing units 7912 and 7914 provided to the side mirrors primarily acquire images to the sides of the vehicle 7900. The image-capturing unit 7916 provided to the rear bumper or the rear hatch primarily acquires images rearward of the vehicle 7900. The image-capturing unit 7918 provided to the top of the windshield inside of the vehicle cabin is primarily used for detecting vehicles traveling ahead, pedestrians, obstructions, signal lights, traffic signs, lane demarcation lines, and so forth.

Note that Fig. 34 illustrates an example of respective shooting ranges of the image-capturing units 7910, 7912, 7914, and 7916. An image-capturing range a indicates the image-capturing range of the image-capturing unit 7910 provided to the front nose, image-capturing ranges b and c indicate the image-capturing ranges of the image-capturing units 7912 and 7914 provided to the respective side mirrors, and an image-capturing range d indicates the image-capturing range of the image-capturing unit 7916 provided to the rear bumper or the rear hatch. For example, overlaying image data image-captured by the image-capturing units 7910, 7912, 7914, and 7916 yields a bird's-eye view image of the vehicle 7900 as viewed from above.

External information detection portions 7920, 7922, 7924, 7926, 7928, and 7930 provided to the front, rear, sides, corners, and top of the windshield inside of the vehicle cabin of the vehicle 7900, may be ultrasound sensors or radar devices, for example. The external information detection portions 7920, 7926, and 7930 provided to the front nose, rear bumper, rear hatch, and top of the windshield inside of the vehicle cabin of the vehicle 7900 may be LIDAR devices, for example. These external information detection portions 7920 to 7930 are primarily used for detection of vehicles traveling ahead, pedestrians, obstructions, and so forth.

Returning to Fig. 33 to continue description, the external information detection unit 7400 causes the image-capturing unit 7410 to perform image capturing of images outside of the vehicle, and receives the image data that has been image-captured. The external information detection unit 7400 also receives detected information from the external information detection portion 7420 that is connected thereto. In a case in which the external information detection portion 7420 is an ultrasound sensor, a radar device, or a LIDAR device, the external information detection unit 7400 emits ultrasonic waves, electromagnetic waves, or the like, and receives information of reflected waves that are received. The external information detection unit 7400 may perform object detection processing regarding people, cars, obstructions, signs, characters on the pavement, and so forth, or distance detection processing, on the basis of the received information. The external information detection unit 7400 may perform environment recognition processing for recognizing rainfall, fog, pavement conditions, and so forth, on the basis of the received information. The external information detection unit 7400 may calculate the distance to an object outside of the vehicle, on the basis of the received information.

Also, the external information detection unit 7400 may perform image recognition processing for recognizing people, cars, obstructions, signs, characters on the pavement, and so forth, or distance detection processing, on the basis of the received image data. The external information detection unit 7400 may perform processing such as distortion correction, positioning, and so forth, with regard to the received image data, and composite image data image-captured by different image-capturing units 7410 to generate a bird's-eye view image or a panorama image. The external information detection unit 7400 may perform viewpoint transformation processing using the image data image-captured by different image-capturing units 7410.

The internal information detection unit 7500 detects information of inside the vehicle. A driver state detection unit 7510 that detects the state of the driver is connected to the internal information detection unit 7500, for example. The driver state detection unit 7510 may include a camera that performs image-capturing of the driver, a biological sensor that detects biological information of the driver, a microphone that performs sound collection of voice within the vehicle cabin, and so forth. The biological sensor is provided to, for example, a seating face, a steering wheel, or the like, and detects biological information of a passenger seated in the seat or the driver gripping the steering wheel. The internal information detection unit 7500 may calculate the degree of fatigue or the degree of concentration of the driver, or may distinguish whether the driver is falling asleep or not, on the basis of the detected information input from the driver state detection unit 7510. The internal information detection unit 7500 may subject collected voice signals to processing such as noise cancelling processing or the like.

The integrated control unit 7600 controls operations in general within the vehicle control system 7000, following various types of programs. An input unit 7800 is connected to the integrated control unit 7600. The input unit 7800 is realized by a device that can be operated for input by a passenger, such as for example, a touch panel, a button, a microphone, a switch, a lever, and so forth. Data obtained by performing speech recognition of voice input by the microphone may be input to the integrated control unit 7600. The input unit 7800 may be a remote-control device using infrared rays or other radio waves, for example, or may be externally-connected equipment such as a mobile phone or a PDA (Personal Digital Assistant) or the like that is compatible with operation of the vehicle control system 7000. The input unit 7800 may be a camera for example, and in this case, a passenger can input information by gestures. Alternatively, data may be input that is obtained by detecting movement of a wearable device that the passenger is fitted with. Further, the input unit 7800 may include an input control circuit or the like that generates input signals on the basis of information input by a passenger or the like using the aforementioned input unit 7800, and outputs to the integrated control unit 7600, for example. The passenger or the like inputs various types of data, instructs processing operations, and so forth, to the vehicle control system 7000, by operating this input unit 7800.

The storage unit 7690 may include ROM (Read Only Memory) that stores various types of programs executed by the microcomputer, and RAM (Random Access Memory) that stores various types of parameters, computation results, sensor values, and so forth. The storage unit 7690 may also be realized by a magnetic storage device such as an HDD (Hard Disc Drive) or the like, a semiconductor storage device, an optical storage device, a magneto-optical storage device, or the like.

The general-purpose communication I/F 7620 is a general-purpose communication I/F that intermediates communication between various types of equipment present in an external environment 7750. The general-purpose communication I/F 7620 may be implemented by a cellular communication protocol such as GSM (registered trademark) (Global System of Mobile communications), WiMAX (registered trademark), LTE (registered trademark) (Long Term Evolution), LTE-A (LTE-Advanced), or the like, or another wireless communication protocol such as wireless LAN (also referred to as Wi-Fi (registered trademark)), Bluetooth (registered trademark), or the like. The general-purpose communication I/F 7620 may, for example, connect to equipment (e.g., an application server or control server) present on an external network (e.g., the Internet, a cloud network, or a business operator specific network), via a base station or an access point. Also, the general-purpose communication I/F 7620 may connect to a terminal that is present in the vicinity of the vehicle (e.g., a terminal of the driver, a pedestrian, or a shop, or an MTC (Machine Type Communication) terminal), using P2P (Peer To Peer) technology, for example.

The dedicated communication I/F 7630 is a communication I/F that supports communication protocols developed with usage in vehicles as an object. The dedicated communication I/F 7630 may, for example, implement WAVE (Wireless Access in Vehicle Environment) that is a combination of lower-layer IEEE 802.11p and higher-layer IEEE 1609, DSRC (Dedicated Short Range Communications), or a standard protocol such as a cellular communication protocol. The dedicated communication I/F 7630 typically carries out V2X communication that is a concept including one or more of vehicle-to-vehicle (Vehicle to Vehicle) communication, road-to-vehicle (Vehicle to Infrastructure) communication, vehicle-to-home (Vehicle to Home) communication, and pedestrian-to-vehicle (Vehicle to Pedestrian) communication.

The positioning unit 7640 receives, from a GNSS (Global Navigation Satellite System) satellite, for example, GNSS signals (e.g., GPS signals from a GPS (Global Positioning System) satellite) and executes positioning, and generates position information including the latitude, longitude, and altitude, of the vehicle. Note that the positioning unit 7640 may identify the current position by exchanging signals with a wireless access point, or may acquire position information from a terminal that has positioning functions, such as a mobile phone, PHS, smartphone, or the like.

The beacon reception unit 7650 receives radio waves or electromagnetic waves emitted from a wireless station or the like installed on the road, for example, and acquires information such as the current position, traffic congestion, road closures, time required, and so forth. Note that the functions of the beacon reception unit 7650 may be included in the above-described dedicated communication I/F 7630.

The onboard equipment I/F 7660 is a communication interface that intermediates connection among the microcomputer 7610 and various types of onboard equipment 7760 present in the vehicle. The onboard equipment I/F 7660 may establish wireless connections using a wireless communication protocol such as wireless LAN, Bluetooth (registered trademark), NFC (Near Field Communication), WUSB (Wireless USB), and so forth. The onboard equipment I/F 7660 may also establish wired connections such as USB (Universal Serial Bus), HDMI (registered trademark) (High-Definition Multimedia Interface, MHL (Mobile High-definition Link), and so forth, via a connection terminal (and cable if necessary) that are omitted from illustration. The onboard equipment 7760 may include, for example, at least one of mobile equipment or wearable equipment that a passenger has, or information equipment loaded into or attached to the vehicle. The onboard equipment 7760 may also include an automotive navigation device that performs route searching to an optional destination. The onboard equipment I/F 7660 exchanges control signals or data signals with such onboard equipment 7760.

The in-vehicle network I/F 7680 is an interface that intermediates communication between the microcomputer 7610 and the communication network 7010. The in-vehicle network I/F 7680 transmits and receives signals and so forth, in accordance with a predetermined protocol that is supported by the communication network 7010.

The microcomputer 7610 of the integrated control unit 7600 controls the vehicle control system 7000 following various types of programs, on the basis of information acquired via at least one of the general-purpose communication I/F 7620, the dedicated communication I/F 7630, the positioning unit 7640, the beacon reception unit 7650, the onboard equipment I/F 7660, and the in-vehicle network I/F 7680. For example, the microcomputer 7610 may compute a control target value for the drive force generating device, steering mechanism, or braking device, on the basis of acquired information regarding inside and outside of the vehicle, and output a control command to the drive system control unit 7100. For example, the microcomputer 7610 may perform collaboration control in order to realize functions of ADAS (Advanced Driver Assistance System) including vehicle collision avoidance or impact mitigation, traveling while following on the basis of inter-vehicle distance, traveling while maintaining vehicle speed, warning of collision of the vehicle, warning of lane departure of the vehicle, and so forth. Also, the microcomputer 7610 may perform collaboration control in order to perform automated driving or the like, of autonomously traveling without driver operations, by controlling the drive force generating device, steering mechanism, braking device, and so forth, on the basis of information regarding the surroundings of the vehicle.

The microcomputer 7610 may generate three-dimensional distance information between the vehicle and objects, such as structures, people, and so forth, in the vicinity, and create local map information including vicinity information regarding the current position of the vehicle, on the basis of information acquired via at least one of the general-purpose communication I/F 7620, the dedicated communication I/F 7630, the positioning unit 7640, the beacon reception unit 7650, the onboard equipment I/F 7660, and the in-vehicle network I/F 7680. The microcomputer 7610 may also predict danger, such as collision of the vehicle, a pedestrian or the like approaching, entering a road closed to vehicle traffic, and so forth, on the basis of acquired information, and generate a signal for warning. The signal for warning may be a signal for generating a warning sound, lighting a warning lamp, or the like, for example.

The audio-and-image output unit 7670 transmits at least one of output signals of audio and image, to an output device that is capable of notifying passengers of the vehicle or those outside of the vehicle of information, visually or audibly. In the example in Fig. 33, an audio speaker 7710, a display unit 7720, and an instrument panel 7730 are exemplified as output devices. The display unit 7720 may include, for example, at least one of an onboard display and a head-up display. The display unit 7720 may have AR (Augmented Reality) display functions. The output device may be a device other than these devices, such as headphones, a wearable device such as an eyeglasses type display or the like worn by a passenger, a projector, a lamp, and so forth. In a case in which the output device is a display device, the display device visually displays results obtained by the microcomputer 7610 performing various types of processing, or information received from another control unit, in various formats, such as text, images, tables, graphs, and so forth. Also, in a case in which the output device is an audio output device, the audio output device converts audio signals made of audio data, acoustic data, or the like, that has been reproduced, into analog signals, and audibly outputs.

Note that in the example illustrated in Fig. 33, at least two control units connected via the communication network 7010 may be integrated into a single control unit. Alternatively, individual control units may be configured of a plurality of control units. Further, the vehicle control system 7000 may include another control unit that is not illustrated. Also, in the above description, part or all of functions assumed by a certain control unit may be borne by another control unit. That is to say, an arrangement may be made in which any one of the control units performs predetermined computation processing, as long as information is transmitted and received via the communication network 7010. In the same way, an arrangement may be made in which a sensor or device connected to any one of the control units is connected to another control unit, and also a plurality of control units mutually transmit and receive detection information via the communication network 7010.

Note that a computer program for realizing the functions of the image-capturing apparatus 1 according to the first embodiment described with reference to Fig. 1 may be installed in any one of the control units or the like. Also, a computer-readable recording medium, in which such a computer program is stored, may be provided. The recording medium is, for example, a magnetic disk, an optical disc, a magneto-optical disc, flash memory, or the like. Also, the computer program may be distributed via a network, for example, without using a recording medium.

In the vehicle control system 7000 described above, the image-capturing apparatus 1 according to the first embodiment described with reference to Fig. 1 can be applied to the integrated control unit 7600 in the application example illustrated in Fig. 33. For example, the image-capturing apparatus 1 corresponds to the image-capturing unit 7410. For example, the dynamic range of the image-capturing unit 7410 can be expanded.

### (Reference Signs List)

1 Image-capturing apparatus
101 Photoelectric conversion unit
102 First accumulating unit
103a Comparator
104 Resetting unit
104a Reset transistor
105 Counting unit
107 Transfer transistor
109 Second accumulating unit
111 Third accumulating unit
115 Capacitance connecting transistor
200 Solid-state image-capturing device
260 Read circuit
280 Signal processing unit

## Claims

1. A light detecting device, comprising:
a photoelectric conversion unit (101) configured to generate charge in response to receiving light;
a first node (n10) that is connected to the photoelectric conversion unit (101);
a first transistor (107) connected between the first node (n10) and the photoelectric conversion unit (101);
a first accumulating unit (102) connected to the first node (n10) via a second transistor (110), wherein the second transistor (110) is configured to be set to a conducting state in a first period and to a non-conducting state in a second period that is different from the first period;
a second accumulating unit (109) directly connected to the first node (n10); a comparator (103a) configured to output a first signal in response to detecting that a potential of the first node (n10) is at least a predetermined potential;
a resetting unit (104) configured to reset the first node (n10) to a reset potential in response to detecting the first signal;
a counting mechanism unit (105) configured to count a number of times the first signal is output by the comparator (103a); and
an amplifying unit (106) that is connected to the first node (n10) and configured to output,
in the first period, a first analog signal after the first transistor (107) is set to the conducting state and a second analog signal after the first node (n10) is set to a reset potential, and,
in the second period, a third analog signal before the first transistor (107) is set to the conducting state and a fourth analog signal after the first transistor (107) is set to the conducting state.

2. The light detecting device according to claim 1, further comprising:
an analog-to-digital conversion unit configured to generate a digital signal on the basis of the first, second, third and fourth analog signals; and
a signal processing unit (280) configured to generate an image signal on the basis of:
the number of times the first signal is output from the comparator (103a); and
the digital signal.

3. The light detecting device according to claim 2, wherein
the resetting unit (104) is configured to reset the first node (n10) after the amplifying unit (106) outputs the first analog signal, and
the amplifying unit (106) is configured to amplify the potential of the first node (n10) after the resetting unit (104) resets the first node (n10), and output the second analog signal to the analog-to-digital conversion unit.

4. The light detecting device according to claim 3, wherein
the amplifying unit (106) is configured to output the first analog signal after a sequence in which the first transistor (107) is set to a conducting state and then set to a non-conducting state.

5. The light detecting device according to claim 4, further comprising:
a third accumulating unit (111) that is connected to the first node (n10) via a third transistor (112).

6. The light detecting device according to claim 5, wherein
the amplifying unit (106) outputs a fifth analog signal during setting the second transistor and the third transistor (112) to a conducting state, and outputs a sixth analog signal after the first transistor (107) is set to the conducting state, and
the analog-to-digital conversion unit generates the digital signal on the basis of the first, second, third, fourth, fifth and sixth analog signals.

7. The light detecting device according to claim 5, wherein
the amplifying unit (106) outputs a fifth analog signal during setting the second transistor (110) and the third transistor (112) to a conducting state, and outputs a sixth analog signal after the first node (n10) is set to a reset potential, and
the analog-to-digital conversion unit generates the digital signal on the basis of the first, second, third, fourth, fifth and sixth analog signals.

8. The light detecting device according to claim 7, wherein
the resetting unit (104) is configured of a fourth transistor (104a) connected between the first node (n10) and a power source unit,
a channel potential of the second transistor (110) in a non-conducting state is greater than that of the third transistor (112) in a non-conducting state, and
a channel potential of the fourth transistor (104a) in a non-conducting state is greater than that of the second transistor (110) in a non-conducting state.

9. The light detecting device according to claim 1, wherein
the first accumulating unit is configured of a metal-insulator-metal capacitance.

10. The light detecting device according to claim 1, wherein
the photoelectric conversion unit (101) is disposed in a first substrate (200a), and
the counting mechanism unit (105) is disposed in a second substrate (200b) stacked to the first substrate.

11. The light detecting device according to claim 10, wherein
the amplifying unit (106) comprises a first amplifying transistor (106a) and a selecting transistor (106b),
the first amplifying transistor (106a) is disposed in the first substrate (200a), and
the selecting transistor (106b) is disposed in the second substrate (200b).

12. The light detecting device according to claim 10, wherein
the comparator (103a) comprises a second amplifying transistor (AMP) and a current mirror (PTR1, PTR2),
the second amplifying transistor (AMP) is disposed in the first substrate (200a), and
the current mirror (PTR1, PTR2) is disposed in the second substrate (200b).

13. The light detecting device according to claim 1, wherein
the photoelectric conversion unit (101) has a predetermined capacitance for accumulating charges, and
the charges are overflowed to the first node (n10) when exceeding the predetermined capacitance.

14. An electronic apparatus, comprising:
an optical system; and
the light detecting device according to any of the preceding claims.

15. A light detecting device, comprising:
a photoelectric conversion unit (101) configured to generate charge in response to receiving light;
a first node (n10) that is connected to the photoelectric conversion unit (101);
a first transistor (107) connected between the first node (n10) and the photoelectric conversion unit (101);
a first accumulating unit (102) connected to the first node (n10) via a second capacitance connecting transistor (115), wherein the second capacitance connecting transistor (115) is configured to be set to a conducting state in a first period and to a nonconducting state in a second period that is different from the first period;
a second accumulating unit (109) directly connected to the first node (n10);
a comparator (103a) configured to output a first signal in response to detecting that a potential of the first node (n10) is at least a predetermined potential;
a resetting unit (104) configured to reset the first node (n10) to a reset potential in response to detecting the first signal;
a counting mechanism unit (105) configured to count a number of times the first signal is output by the comparator (103a);
a third accumulating unit (111) connected to the first node (n10) via a third transistor (112), wherein the third transistor (112) is controllable by the first signal in the first period and is in the conducting state in the second period; and
an amplifying unit (106) that is connected to the first node (n10) and configured to output,
in the first period, a first analog signal after the first transistor (107) is set to the conducting state, a second analog signal after the first node (n10) is set to a reset potential, and a fifth analog signal before the first transistor (107) is set to the conducting state.

## Patentansprüche

1. Lichterfassungsvorrichtung, umfassend:
eine Einheit zur photoelektrischen Umwandlung (101), die konfiguriert ist, um als Reaktion auf ein Empfangen von Licht Ladung zu erzeugen;
einen ersten Knoten (n10), der mit der Einheit zur photoelektrischen Umwandlung (101) verbunden ist;
einen ersten Transistor (107), der zwischen den ersten Knoten (n10) und die Einheit zur photoelektrischen Umwandlung (101) geschaltet ist;
eine erste Akkumulierungseinheit (102), die über einen zweiten Transistor (110) mit dem ersten Knoten (n10) verbunden ist, wobei der zweite Transistor (110) konfiguriert ist, um in einer ersten Periode in einen leitenden Zustand und in einer zweiten Periode, die sich von der ersten Periode unterscheidet, in einen nichtleitenden Zustand versetzt zu werden;
eine zweite Akkumulierungseinheit (109), die direkt mit dem ersten Knoten (n10) verbunden ist;
einen Komparator (103a), der konfiguriert ist, um ein erstes Signal als Reaktion darauf auszugeben, dass erkannt wird, dass ein Potenzial des ersten Knotens (n10) mindestens ein vorbestimmtes Potenzial ist;
eine Rücksetzeinheit (104), die konfiguriert ist, um den ersten Knoten (n10) als Reaktion auf ein Erkennen des ersten Signals auf ein Rücksetzpotenzial zurückzusetzen;
eine Zählmechanismuseinheit (105), die konfiguriert ist, um eine Anzahl von Malen zu zählen, die das erste Signal durch den Komparator (103a) ausgegeben wird; und
eine Verstärkungseinheit (106), die mit dem ersten Knoten (n10) verbunden ist und konfiguriert ist zum Ausgeben,
in der ersten Periode, eines ersten analogen Signals, nachdem der erste Transistor (107) in den leitenden Zustand versetzt wurde, und eines zweiten analogen Signals, nachdem der erste Knoten (n10) auf ein Rücksetzpotenzial gesetzt wurde, und,
in der zweiten Periode, eines dritten analogen Signals, bevor der erste Transistor (107) in den leitenden Zustand versetzt wird, und eines vierten analogen Signals, nachdem der erste Transistor (107) in den leitenden Zustand versetzt wurde.

2. Lichterfassungsvorrichtung nach Anspruch 1, ferner umfassend:
eine Analog-Digital-Wandlungs-Einheit, die konfiguriert ist, um ein digitales Signal auf der Grundlage des ersten, zweiten, dritten und vierten analogen Signals zu erzeugen; und
eine Signalverarbeitungseinheit (280), die konfiguriert ist, um ein Bildsignal zu erzeugen auf der Grundlage:
der Anzahl von Malen, die das erste Signal aus dem Komparator (103a) ausgegeben wird; und des digitalen Signals.

3. Lichterfassungsvorrichtung nach Anspruch 2, wobei
die Rücksetzeinheit (104) konfiguriert ist, um den ersten Knoten (n10) zurückzusetzen, nachdem die Verstärkungseinheit (106) das erste analoge Signal ausgegeben hat, und
die Verstärkungseinheit (106) konfiguriert ist, um das Potenzial des ersten Knotens (n10) zu verstärken, nachdem die Rücksetzeinheit (104) den ersten Knoten (n10) zurückgesetzt hat, und das zweite analoge Signal an die Analog-Digital-Wandlungs-Einheit auszugeben.

4. Lichterfassungsvorrichtung nach Anspruch 3, wobei
die Verstärkungseinheit (106) konfiguriert ist, um das erste analoge Signal nach einer Sequenz auszugeben, in der der erste Transistor (107) in einen leitenden Zustand versetzt wird und dann in einen nichtleitenden Zustand versetzt wird.

5. Lichterfassungsvorrichtung nach Anspruch 4, ferner umfassend:
eine dritte Akkumulierungseinheit (111), die über einen dritten Transistor (112) mit dem ersten Knoten (n10) verbunden ist.

6. Lichterfassungsvorrichtung nach Anspruch 5, wobei
die Verstärkungseinheit (106) ein fünftes analoges Signal während des Versetzens des zweiten Transistors und des dritten Transistors (112) in einen leitenden Zustand ausgibt und ein sechstes analoges Signal ausgibt, nachdem der erste Transistor (107) in den leitenden Zustand versetzt wurde, und
die Analog-Digital-Wandlungs-Einheit das digitale Signal auf der Grundlage des ersten, zweiten, dritten, vierten, fünften und sechsten analogen Signals erzeugt.

7. Lichterfassungsvorrichtung nach Anspruch 5, wobei
die Verstärkungseinheit (106) ein fünftes analoges Signal während des Versetzens des zweiten Transistors (110) und des dritten Transistors (112) in einen leitenden Zustand ausgibt und ein sechstes analoges Signal ausgibt, nachdem der erste Knoten (n10) auf ein Rücksetzpotenzial gesetzt wurde, und
die Analog-Digital-Wandlungs-Einheit das digitale Signal auf der Grundlage des ersten, zweiten, dritten, vierten, fünften und sechsten analogen Signals erzeugt.

8. Lichterfassungsvorrichtung nach Anspruch 7, wobei
die Rücksetzeinheit (104) aus einem vierten Transistor (104a) konfiguriert ist, der zwischen den ersten Knoten (n10) und eine Energiequelleneinheit geschaltet ist,
ein Kanalpotenzial des zweiten Transistors (110) in einem nichtleitenden Zustand größer ist als das des dritten Transistors (112) in einem nichtleitenden Zustand und
ein Kanalpotenzial des vierten Transistors (104a) in einem nichtleitenden Zustand größer ist als das des zweiten Transistors (110) in einem nichtleitenden Zustand.

9. Lichterfassungsvorrichtung nach Anspruch 1, wobei
die erste Akkumulierungseinheit aus einer Metall-Isolator-Metall-Kapazität konfiguriert ist.

10. Lichterfassungsvorrichtung nach Anspruch 1, wobei
die Einheit zur photoelektrischen Umwandlung (101) in einem ersten Substrat (200a) angeordnet ist, und
die Zählmechanismuseinheit (105) in einem zweiten Substrat (200b) angeordnet ist, das auf das erste Substrat gestapelt ist.

11. Lichterfassungsvorrichtung nach Anspruch 10, wobei
die Verstärkungseinheit (106) einen ersten Verstärkungstransistor (106a) und einen Auswahltransistor (106b) umfasst,
der erste Verstärkungstransistor (106a) in dem ersten Substrat (200a) angeordnet ist und
der Auswahltransistor (106b) in dem zweiten Substrat (200b) angeordnet ist.

12. Lichterfassungsvorrichtung nach Anspruch 10, wobei
der Komparator (103a) einen zweiten Verstärkungstransistor (AMP) und einen Stromspiegel (PTR1, PTR2) umfasst,
der zweite Verstärkungstransistor (AMP) in dem ersten Substrat (200a) angeordnet ist und
der Stromspiegel (PTR1, PTR2) in dem zweiten Substrat (200b) angeordnet ist.

13. Lichterfassungsvorrichtung nach Anspruch 1, wobei
die Einheit zur photoelektrischen Umwandlung (101) eine vorbestimmte Kapazität zum Akkumulieren von Ladungen aufweist und
die Ladungen zu dem ersten Knoten (n10) abgeleitet werden, wenn die vorbestimmte Kapazität überschritten wird.

14. Elektronische Einrichtung, umfassend:
ein optisches System und
die Lichterfassungsvorrichtung nach einem der vorstehenden Ansprüche.

15. Lichterfassungsvorrichtung, umfassend:
eine Einheit zur photoelektrischen Umwandlung (101), die konfiguriert ist, um als Reaktion auf ein Empfangen von Licht Ladung zu erzeugen;
einen ersten Knoten (n10), der mit der Einheit zur photoelektrischen Umwandlung (101) verbunden ist;
einen ersten Transistor (107), der zwischen den ersten Knoten (n10) und die Einheit zur photoelektrischen Umwandlung (101) geschaltet ist;
eine erste Akkumulierungseinheit (102), die über einen zweiten Kapazitätsverbindungstransistor (115) mit dem ersten Knoten (n10) verbunden ist, wobei der zweite Kapazitätsverbindungstransistor (115) konfiguriert ist, um in einer ersten Periode in einen leitenden Zustand und in einer zweiten Periode, die sich von der ersten Periode unterscheidet, in einen nichtleitenden Zustand versetzt zu werden;
eine zweite Akkumulierungseinheit (109), die direkt mit dem ersten Knoten (n10) verbunden ist;
einen Komparator (103a), der konfiguriert ist, um ein erstes Signal als Reaktion darauf auszugeben, dass erkannt wird, dass ein Potenzial des ersten Knotens (n10) mindestens ein vorbestimmtes Potenzial ist;
eine Rücksetzeinheit (104), die konfiguriert ist, um den ersten Knoten (n10) als Reaktion auf ein Erkennen des ersten Signals auf ein Rücksetzpotenzial zurückzusetzen;
eine Zählmechanismuseinheit (105), die konfiguriert ist, um eine Anzahl von Malen zu zählen, die das erste Signal durch den Komparator (103a) ausgegeben wird;
eine dritte Akkumulierungseinheit (111), die über einen dritten Transistor (112) mit dem ersten Knoten (n10) verbunden ist, wobei der dritte Transistor (112) in der ersten Periode durch das erste Signal steuerbar ist und sich in der zweiten Periode im leitenden Zustand befindet; und
eine Verstärkungseinheit (106), die mit dem ersten Knoten (n10) verbunden ist und konfiguriert ist zum Ausgeben,
in der ersten Periode, eines ersten analogen Signals, nachdem der erste Transistor (107) in den leitenden Zustand versetzt wurde, eines zweiten analogen Signals, nachdem der erste Knoten (n10) auf ein Rücksetzpotenzial gesetzt wurde, und eines fünften analogen Signals, bevor der erste Transistor (107) in den leitenden Zustand versetzt wird.

## Revendications

1. Dispositif de détection de lumière, comprenant :
une unité de conversion photoélectrique (101) configurée pour générer une charge en réponse à la réception de lumière ;
un premier nœud (n10) qui est connecté à l'unité de conversion photoélectrique (101) ;
un premier transistor (107) connecté entre le premier nœud (n10) et l'unité de conversion photoélectrique (101) ;
une première unité d'accumulation (102) connectée au premier nœud (n10) par l'intermédiaire d'un deuxième transistor (110), dans lequel le deuxième transistor (110) est configuré pour être mis à un état conducteur dans une première période et à un état non conducteur dans une seconde période qui est différente de la première période ;
une deuxième unité d'accumulation (109) directement connectée au premier nœud (n10) ; un comparateur (103a) configuré pour émettre un premier signal en réponse à la détection qu'un potentiel du premier nœud (n10) est au moins un potentiel prédéterminé ;
une unité de réinitialisation (104) configurée pour réinitialiser le premier nœud (n10) à un potentiel de réinitialisation en réponse à la détection du premier signal ;
une unité de mécanisme de comptage (105) configurée pour compter un nombre de fois où le premier signal est émis par le comparateur (103a) ; et
une unité d'amplification (106) qui est connectée au premier nœud (n10) et configurée pour émettre,
dans la première période, un premier signal analogique après que le premier transistor (107) est mis à l'état conducteur et un deuxième signal analogique après que le premier nœud (n10) est mis à un potentiel de réinitialisation, et,
dans la second période, un troisième signal analogique avant que le premier transistor (107) ne soit mis à l'état conducteur et un quatrième signal analogique après que le premier transistor (107) est mis à l'état conducteur.

2. Dispositif de détection de lumière selon la revendication 1, comprenant en outre :
une unité de conversion analogique-numérique configurée pour générer un signal numérique sur la base des premier, deuxième, troisième et quatrième signaux analogiques ; et
une unité de traitement de signal (280) configurée pour générer un signal d'image sur la base de :
le nombre de fois où le premier signal est émis par le comparateur (103a) ; et le signal numérique.

3. Dispositif de détection de lumière selon la revendication 2, dans lequel
l'unité de réinitialisation (104) est configurée pour réinitialiser le premier nœud (n10) après que l'unité d'amplification (106) a émis le premier signal analogique, et
l'unité d'amplification (106) est configurée pour amplifier le potentiel du premier nœud (n10) après que l'unité de réinitialisation (104) a réinitialisé le premier nœud (n10), et émis le deuxième signal analogique à l'unité de conversion analogique-numérique.

4. Dispositif de détection de lumière selon la revendication 3, dans lequel
l'unité d'amplification (106) est configurée pour émettre le premier signal analogique après une séquence dans laquelle le premier transistor (107) est mis dans un état conducteur et ensuite mis dans un état non conducteur.

5. Dispositif de détection de lumière selon la revendication 4, comprenant en outre :
une troisième unité d'accumulation (111) qui est connectée au premier nœud (n 10) par l'intermédiaire d'un troisième transistor (112).

6. Dispositif de détection de lumière selon la revendication 5, dans lequel
l'unité d'amplification (106) émet un cinquième signal analogique pendant la mise du deuxième transistor et du troisième transistor (112) à un état conducteur, et émet un sixième signal analogique après que le premier transistor (107) est mis à l'état conducteur, et
l'unité de conversion analogique-numérique génère le signal numérique sur la base des premier, deuxième, troisième, quatrième, cinquième et sixième signaux analogiques.

7. Dispositif de détection de lumière selon la revendication 5, dans lequel
l'unité d'amplification (106) émet un cinquième signal analogique pendant la mise du deuxième transistor (110) et du troisième transistor (112) à un état conducteur, et émet un sixième signal analogique après que le premier nœud (n10) est mis à un potentiel de réinitialisation, et
l'unité de conversion analogique-numérique génère le signal numérique sur la base des premier, deuxième, troisième, quatrième, cinquième et sixième signaux analogiques.

8. Dispositif de détection de lumière selon la revendication 7, dans lequel
l'unité de réinitialisation (104) est constituée d'un quatrième transistor (104a) connecté entre le premier nœud (n10) et une unité de source d'alimentation,
un potentiel de canal du deuxième transistor (110) dans un état non conducteur est supérieur à celui du troisième transistor (112) dans un état non conducteur, et
un potentiel de canal du quatrième transistor (104a) dans un état non conducteur est supérieur à celui du deuxième transistor (110) dans un état non conducteur.

9. Dispositif de détection de lumière selon la revendication 1, dans lequel
la première unité d'accumulation est constituée d'une capacité métal-isolant-métal.

10. Dispositif de détection de lumière selon la revendication 1, dans lequel
l'unité de conversion photoélectrique (101) est disposée dans un premier substrat (200a), et
l'unité de mécanisme de comptage (105) est disposée dans un second substrat (200b) empilé sur le premier substrat.

11. Dispositif de détection de lumière selon la revendication 10, dans lequel
l'unité d'amplification (106) comprend un premier transistor d'amplification (106a) et un transistor de sélection (106b),
le premier transistor d'amplification (106a) est disposé dans le premier substrat (200a), et
le transistor de sélection (106b) est disposé dans le second substrat (200b).

12. Dispositif de détection de lumière selon la revendication 10, dans lequel
le comparateur (103a) comprend un deuxième transistor d'amplification (AMP) et un miroir de courant (PTR1, PTR2),
le deuxième transistor d'amplification (AMP) est disposé dans le premier substrat (200a), et
le miroir de courant (PTR1, PTR2) est disposé dans le second substrat (200b).

13. Dispositif de détection de lumière selon la revendication 1, dans lequel
l'unité de conversion photoélectrique (101) a une capacité prédéterminée pour accumuler des charges, et
les charges sont déversées vers le premier nœud (n10) lorsqu'elles dépassent la capacité prédéterminée.

14. Appareil électronique, comprenant :
un système optique ; et
le dispositif de détection de lumière selon l'une quelconque des revendications précédentes.

15. Dispositif de détection de lumière, comprenant :
une unité de conversion photoélectrique (101) configurée pour générer une charge en réponse à la réception de lumière ;
un premier nœud (n10) qui est connecté à l'unité de conversion photoélectrique (101) ;
un premier transistor (107) connecté entre le premier nœud (n10) et l'unité de conversion photoélectrique (101) ;
une première unité d'accumulation (102) connectée au premier nœud (n10) par l'intermédiaire d'un deuxième transistor de connexion de capacité (115), dans lequel le deuxième transistor de connexion de capacité (115) est configuré pour être mis dans un état conducteur dans une première période et dans un état non conducteur dans une seconde période qui est différente de la première période ;
une deuxième unité d'accumulation (109) directement connectée au premier nœud (n10) ;
un comparateur (103a) configuré pour émettre un premier signal en réponse à la détection qu'un potentiel du premier nœud (n10) est au moins un potentiel prédéterminé ;
une unité de réinitialisation (104) configurée pour réinitialiser le premier nœud (n10) à un potentiel de réinitialisation en réponse à la détection du premier signal ;
une unité de mécanisme de comptage (105) configurée pour compter un nombre de fois où le premier signal est émis par le comparateur (103a) ;
une troisième unité d'accumulation (111) connectée au premier nœud (n10) par l'intermédiaire d'un troisième transistor (112), dans lequel le troisième transistor (112) peut être commandé par le premier signal dans la première période et est à l'état conducteur dans la seconde période ; et
une unité d'amplification (106) qui est connectée au premier nœud (n10) et configurée pour émettre,
dans la première période, un premier signal analogique après que le premier transistor (107) est mis à l'état conducteur, un deuxième signal analogique après que le premier nœud (n10) est mis à un potentiel de réinitialisation, et un cinquième signal analogique avant que le premier transistor (107) soit mis à l'état conducteur.
